(19) **Europäisches Patentamt / European Patent Office / Office européen des brevets**

(11) **EP 4 498 747 A1**

(12) # EUROPEAN PATENT APPLICATION
published in accordance with Art. 153(4) EPC

(43) Date of publication:
**29.01.2025 Bulletin 2025/05**

(21) Application number: **23794914.4**

(22) Date of filing: **28.03.2023**

(51) International Patent Classification (IPC):
**H04W 72/04** (2023.01)

(52) Cooperative Patent Classification (CPC):
**H04L 5/00; H04W 72/04; H04W 72/0446; H04W 72/53**

(86) International application number:
**PCT/CN2023/084406**

(87) International publication number:
**WO 2023/207479 (02.11.2023 Gazette 2023/44)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **28.04.2022 CN 202210471053**

(71) Applicant: **CICT Connected and Intelligent Technologies Co., Ltd.**
**Chongqing 400041 (CN)**

(72) Inventors:
• **WEN, Xiaoran**
  **Chongqing 400000 (CN)**
• **ZHAO, Rui**
  **Chongqing 400000 (CN)**
• **WANG, Yakun**
  **Chongqing 400000 (CN)**

(74) Representative: **Viering, Jentschura & Partner mbB**
**Patent- und Rechtsanwälte**
**Am Brauhaus 8**
**01099 Dresden (DE)**

(54) **RESOURCE SELECTION METHOD, INFORMATION SENDING METHOD, APPARATUS, AND TERMINAL**

(57) The present disclosure discloses a resource selection method, an information sending method, apparatuses, and a terminal, relating to the technical field of communications. The resource selection method includes: performing resource exclusion on resources in a resource selection window by using a slot candidate resource as granularity, to obtain a candidate resource set; selecting a transmission resource for first target data from the candidate resource set; and sending the first target data to a second terminal through the transmission resource.

```
┌─────────────────────────────────────────────────┐
│ performing resource exclusion on resources in a  │──101
│ resource selection window by using a slot         │
│ candidate resource as granularity, to obtain a    │
│ candidate resource set                            │
└─────────────────────────────────────────────────┘
                        │
                        ▼
┌─────────────────────────────────────────────────┐
│ selecting a transmission resource for first       │──102
│ target data from the candidate resource set       │
└─────────────────────────────────────────────────┘
                        │
                        ▼
┌─────────────────────────────────────────────────┐
│ sending the first target data to a second         │──103
│ terminal through the transmission resource        │
└─────────────────────────────────────────────────┘
```

FIG. 1

**Description**

CROSS REFERENCE TO RELEVANT APPLICATIONS

The present disclosure claims the priorities of the Chinese patent application 202210471053.6 filed in China on April 28th, 2022, which is incorporated herein in its entirety by reference.

TECHNICAL FIELD

The present disclosure relates to the technical field of communications, and particularly relates to a resource selection method, an information sending method, apparatuses, and a terminal.

BACKGROUND

In related art, the sidelink mode-2 resource allocation method is based on the scenario where the terminal operates on a dedicated carrier, that is, the sidelink user equipment (SL UE) can ensure to complete the transmission on reserved resources without worrying about the channel being occupied by other technologies. However, for unlicensed frequency bands, the terminal UE needs to complete the channel access before transmission and can only occupy the channel consecutively for a period of time. If there is an interruption during transmission, it may cause the channel to be occupied by other technologies and unable to complete subsequent transmission. That is, the probability of UE successfully completing data transmission after the channel access is low. Therefore, to ensure the reliability of sidelink service transmission, it is necessary to enhance the SL mode-2 resource allocation method for sidelink UEs transmitting in unlicensed frequency bands.

SUMMARY

Embodiments of the present disclosure provide a resource selection method, an information sending method, apparatuses, and a terminal, to solve the problem of low probability of successful data transmission for UE operating in unlicensed frequency bands after channel access in related art.

In order to solve the above technical problems, the embodiments of the present disclosure provide the following technical solutions:
in a first aspect, an embodiment of the present disclosure provides a resource selection method, applied to a first terminal, and the method includes:

performing resource exclusion on resources in a resource selection window by using a slot candidate resource as granularity, to obtain a candidate resource set;
selecting a transmission resource for first target data from the candidate resource set; and

sending the first target data to a second terminal through the transmission resource.

In a second aspect, an embodiment of the present disclosure further provides an information sending method, applied to a second terminal, and the method includes:

receiving first target data sent by a first terminal through a transmission resource, wherein the transmission resource is selected by the first terminal for the first target data from a candidate resource set, and the candidate resource set is obtained by performing resource exclusion on resources in a resource selection window by using a slot candidate resource as granularity; and
sending or not sending feedback information to the first terminal according to transmission information of sidelink control information (SCI).

In a third aspect, an embodiment of the present disclosure further provides a resource selection apparatus, applied to a first terminal, wherein the apparatus includes:

a resource exclusion module configured for performing resource exclusion on resources in a resource selection window by using a slot candidate resource as granularity, to obtain a candidate resource set;
a resource selection module configured for selecting a transmission resource for first target data from the candidate resource set; and
a data sending module configured for sending the first target data to a second terminal through the transmission resource.

In a fourth aspect, an embodiment of the present disclosure further provides an information sending apparatus, applied to a second terminal, wherein the apparatus includes:

a data receiving module configured for receiving first target data sent by a first terminal through a transmission resource, wherein the transmission resource is selected by the first terminal for the first target data from a candidate resource set, and the candidate resource set is obtained by performing resource exclusion on resources in a resource selection window by using a slot candidate resource as granularity; and
an information sending module configured for sending or not sending feedback information to the first terminal according to transmission information of sidelink control information (SCI).

In a fifth aspect, an embodiment of the present disclosure further provides a terminal, including: a processor, a memory, and a program stored on the memory and executable on the processor, wherein the program, when executed by the processor, implements steps of the resource selection method according to any one of the first aspect, or implements steps of the information sending method according to any one of the second aspect.

In a sixth aspect, an embodiment of the present disclosure further provides a readable storage medium storing a program that, when executed by a processor, implements steps of the resource selection method according to any one of the first aspect, or implements steps of the information sending method according to any one of the second aspect.

The beneficial effect of the present disclosure is that: the solution of the present disclosure is to perform resource exclusion on the resources in the resource selection window by using the slot candidate resource as the granularity, to obtain the candidate resource set; and select the transmission resource for the first target data from the candidate resource set. This enables the terminal to use the consecutive transmission resources selected for the first target data for data transmission. Through the transmission resources, the first target data is sent to the second terminal, improving the probability of the terminal successfully completing the data transmission after successful channel access. It is more suitable for sidelink mode-2 resource allocation of the sidelink UE operating in unlicensed frequency bands.

## BRIEF DESCRIPTION OF THE DRAWINGS

FIG. 1 shows a flow chart of a resource selection method according to an embodiment of the present disclosure;

FIG. 2 shows a first schematic diagram of selecting transmission resources according to an embodiment of the present disclosure;

FIG. 3 shows a second schematic diagram of selecting transmission resources according to an embodiment of the present disclosure;

FIG. 4 shows a third schematic diagram of selecting transmission resources according to an embodiment of the present disclosure;

FIG. 5 shows a fourth schematic diagram of selecting transmission resources according to an embodiment of the present disclosure;

FIG. 6 shows a fifth schematic diagram of selecting transmission resources according to an embodiment of the present disclosure;

FIG. 7 shows a sixth schematic diagram of selecting transmission resources according to an embodiment of the present disclosure;

FIG. 8 shows a seventh schematic diagram of selecting transmission resources according to an embodiment of the present disclosure;

FIG. 9 shows a flow chart of an information sending method according to an embodiment of the present disclosure;

FIG. 10 shows a first schematic diagram of a sending position of feedback information according to an embodiment of the present disclosure;

FIG. 11 shows a second schematic diagram of a sending position of feedback information according to an embodiment of the present disclosure;

FIG. 12 shows a structural schematic diagram of a resource selection apparatus according to an embodiment of the present disclosure;

FIG. 13 shows a structural schematic diagram of an information sending apparatus according to an embodiment of the present disclosure; and

FIG. 14 shows a structural schematic diagram of a terminal according to an embodiment of the present disclosure.

## DETAILED DESCRIPTION

In order to make the purpose, the technical solutions and the advantages of the present disclosure clearer, detailed description will be performed below with reference to the drawings and the particular embodiments. For the problem of low probability of successful data transmission for UE operating in unlicensed frequency bands after channel access in related art, the present disclosure provides a resource selection method, an information sending method, apparatuses, and a terminal.

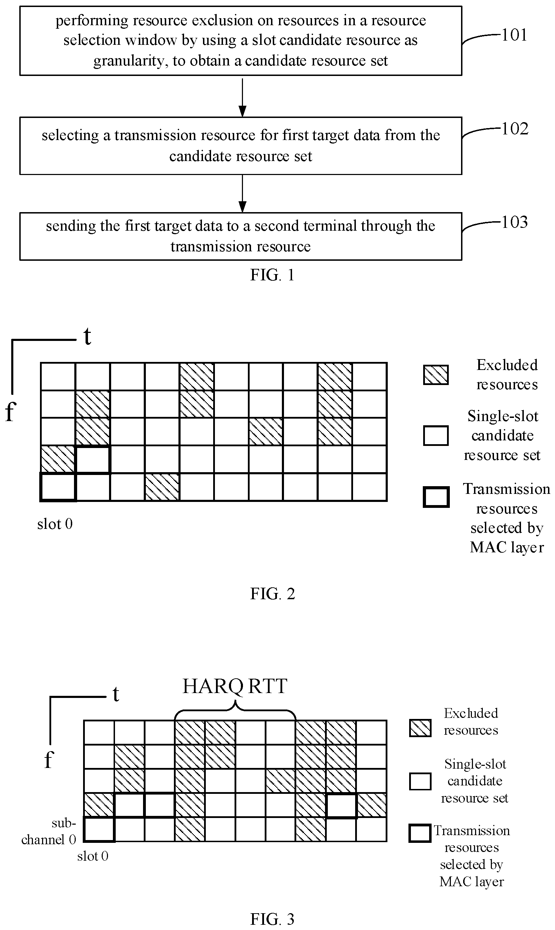

As shown in FIG. 1, an embodiment of the present disclosure provides a resource selection method, applied to a first terminal, and the method includes: step 101: performing resource exclusion on resources in a resource selection window by using a slot candidate resource as granularity, to obtain a candidate resource set.

It should be noted that in this embodiment, the first terminal is a sidelink UE operating in an unlicensed frequency band.

In this step, the physical layer of the first terminal performs resource exclusion on the resources in the resource selection window by using the slot candidate resource as the granularity, obtains the candidate resource set, and reports the candidate resource set to a medium access control (MAC) layer.

Specifically, the first terminal performs SCI decoding and/or reference signal receiving power (RSRP) measurement within a sensing window to obtain channel occupancy information. At a time when a service packet of the first target data arrives or resource selection (reselection) is performed, resource exclusion is performed for each slot candidate resource to obtain an available resource set after resource exclusion, which is the candidate resource set, and the candidate resource set is then reported to the MAC layer.

Step 102: selecting a transmission resource for first target data from the candidate resource set.

In this step, after the MAC layer of the first terminal receives the candidate resource set, initial transmission resources and/or retransmission resources are selected from the candidate resource set for the first target data during resource selection.

Among them, the initial transmission resources and/or retransmission resources are used for initial transmission and/or retransmission, respectively.

In this embodiment, resource exclusion is performed on the resources in the resource selection window by using the slot candidate resource as the granularity, to obtain the candidate resource set; and the transmission resource is selected for the first target data from the candidate resource set. This enables the terminal to use the consecutive transmission resources selected for the first target data for the data transmission.

Step 103: sending the first target data to a second terminal through the transmission resource.

In this step, after determining the resources for the initial transmission and/or the retransmission, the initial transmission and/or the retransmission of the first target data is performed through the initial transmission resources and/or the retransmission resources, respectively.

In this embodiment, the first target data is sent to the second terminal through the transmission resources, which increases the probability of the terminal successfully completing the data transmission after successful channel access, and is more suitable for sidelink mode-2 resource allocation of sidelink UE operating in unlicensed frequency bands.

Optionally, the slot candidate resource includes a single-slot candidate resource and/or a multi-slot candidate resource;

when the slot candidate resource includes the single-slot candidate resource, the transmission resource of the first target data is at least one single-slot candidate resource with consecutive time-domain positions in the candidate resource set; and when the slot candidate resource includes the multi-slot candidate resource, the transmission resource of the first target data is at least one multi-slot candidate resource in the candidate resource set.

Specifically, the slot candidate resource includes the single-slot candidate resource and/or the multi-slot candidate resource.

The single-slot candidate resources are candidate resources that satisfy a first condition and a second condition.

The first condition includes one of the following: occupying L consecutive sub-channels in the frequency domain; occupying L non-consecutive sub-channels in the frequency domain; occupying R consecutive interlaced resource blocks (interlaced resource block, IRB) in the frequency domain; and occupying R non-consecutive interlaced resource blocks IRB in the frequency domain.

The second condition includes: occupying one slot in the time domain.

L is the number of sub-channels required for the transmission of the first target data within one slot, and R is the number of IRBs required for the transmission of the first target data within one slot. That is to say, the single-slot candidate resource is defined as a candidate resource that occupies L consecutive sub-channels in the frequency domain, or occupies L non-consecutive sub-channels in the frequency domain, or occupies R consecutive interlaced resource blocks IRBs in the frequency domain, or occupies R non-consecutive interlaced resource blocks IRBs in the frequency domain, and occupies one slot in the time domain. Among them, $L_{subCH}$ is the number of the sub-channels required for the transmission of the first target data within one slot, and R is the number of IRBs required for the transmission of the first target data within one slot.

The multi-slot candidate resources are candidate resources that satisfy a third condition and a fourth condition.

The third condition includes one of the following: occupying L consecutive sub-channels in the frequency domain; occupying L non-consecutive sub-channels in the frequency domain; occupying R consecutive interlaced resource blocks IRBs in the frequency domain; and occupying R non-consecutive interlaced resource blocks IRBs in the frequency domain.

The fourth condition includes: occupying M consecutive slots in the time domain.

L is the number of the sub-channels required for the transmission of the first target data within one slot, R is the number of IRBs required for the transmission of the first target data within one slot, and M is the configured number of consecutive repeated transmissions of the first target data. That is to say, multi-slot candidate resources is defined as a candidate resource that occupies L consecutive sub-channels in the frequency domain, or occupies L non-consecutive sub-channels in the frequency domain, or occupies R consecutive IRBs in the frequency domain, or occupies R non-consecutive IRBs in the frequency domain, and belongs to M consecutive slots in the time domain. Among them, L is the number of the sub-channels required for the transmission of the first target data within one slot, R is the number of IRBs required for the transmission of the first target data within one slot, M is the number of consecutive repeated transmissions of the first target data configured or pre-configured by the higher layer, M is a positive integer and $M \leq N$, N is the total number of transmissions of the first target data.

In the case where the slot candidate resources include the single-slot candidate resources, the first terminal performs resource exclusion on the resources in the resource selection window by using the single-slot candidate resources as the granularity, obtains a single-slot candidate resource set, and reports it to the MAC layer. The MAC layer selects at least one single-slot candidate resource with consecutive time-domain positions from the single-slot candidate resource set SA as the initial transmission resource and/or retransmission resource of the first target data.

In the case where the slot candidate resources include the multi-slot candidate resources, the first terminal performs resource exclusion on the resources in the resource selection window by using the multi-slot candidate resources as the granularity, obtains a multi-slot candidate resource set, and reports it to the MAC layer. The MAC layer selects one or more multi-slot candidate resources from the multi-slot candidate resource set SA as the initial transmission resource and/or retransmission resource of the first target data.

Since the UE needs to ensure consecutive channel occupancy after listening before talk (LBT), otherwise it may cause transmission interruption due to the access of other technologies, the UE needs to select multiple consecutive slot candidate resources when selecting resources, that is, at least one single-slot candidate resource with consecutive time-domain positions, or one or more multi-slot candidate resources, which are used for initial transmission and/or retransmission respectively, in order to improve the probability of the UE successfully completing data transmission after successful channel access.

The process of selecting transmission resources for the first target data when the slot candidate resources include single-slot candidate resources is illustrated below.

Optionally, when the slot candidate resource includes the single-slot candidate resource, the selecting the transmission resource for the first target data from the candidate resource set includes:

if a number of resource groups satisfying a first target condition in the candidate resource set is greater than or equal to a first preset threshold value, randomly selecting one resource group from the resource groups satisfying the first target condition as partial transmission resources or entire transmission resources of the first target data.

Whether there are resource groups in the single-slot candidate resource set SA that satisfy the first target condition is determined, if there are resource groups that satisfy the first target condition, then whether the number of the resource groups that satisfy the first target condition is greater than or equal to the first threshold value is determined. If so, one resource group is randomly selected from the resource groups that satisfy the first target condition as the partial transmission resources or the entire transmission resources of the first target data.

Optionally, the first threshold value is a positive integer greater than or equal to 1. Whether the random resource group in the resource group that satisfies the first target condition is used as the partial transmission resources for the first target data or as the entire transmission resources for the first target data needs to be determined according to the number of single-slot candidate resources included in the resource group and the total number N of the transmissions of the first target data.

Optionally, the resource groups satisfying the first target condition include at least one of followings: a resource group including M single-slot candidate resources with consecutive time-domain positions; a resource group including M single-slot candidate resources with consecutive time-domain positions starting from a first slot; and a resource group including M single-slot candidate resources with consecutive time-domain positions starting from a second slot;

wherein M is a configured number of consecutive repeated transmissions of the first target data; the first slot is a first one of slots with available resources in the candidate resource; and the second slot is after the first slot.

Determining whether there are resource groups in the single-slot candidate resource set SA that satisfy the first target condition is to, determine whether there are resource groups in the single-slot candidate resource set SA that satisfy the following conditions:

the resource group including M single-slot candidate resources with consecutive time-domain positions; the resource group including M single-slot candidate resources with consecutive time-domain positions starting from the first one of slots with available resources in the candidate resource; the resource group including M single-slot candidate resources with consecutive time-domain positions starting from the second slot after the first one of slots with available resources in the candidate resource.

M is the number of consecutive repeated transmissions of the first target data configured or pre-configured by the higher layer.

If there are resource groups in the single-slot candidate resource set SA that satisfy the first target condition mentioned above, or if the number of the resource groups that satisfy the first target condition is greater than or equal to the first threshold value, then a resource group is randomly selected from the resource groups that satisfy the first target condition as the partial transmission resources or the entire transmission resources of the first target data. Specifically, if M is less than N, the resource group randomly selected from the resource groups that satisfy the first target condition is used as the transmission resource for the first M transmissions of the first target data, or the resource group randomly selected from the resource groups that satisfy the first target condition is used as the transmission resource for the M transmissions of the first target data. If M is equal to N, then the resource group randomly selected from the resource groups that satisfy the first target condition is used as the entire transmission resources of the first target data, that is, the randomly selected resource group is used for the initial transmission and/or retransmission of the first target data. Among them, the first threshold value is a positive integer greater than or equal to 1.

As an embodiment, in the single-slot candidate resource set SA, it is determined whether there is a resource group including M single-slot candidate resources with consecutive time-domain positions. If there is the resource group, it is determined whether the number of the resource groups including M single-slot candidate resources with consecutive time-domain positions is greater than or equal to the first threshold value. If the determination result is yes, one resource group is randomly selected from the resource groups including M single-slot candidate resources with consecutive time-domain positions as the partial transmission resources or the entire transmission resources of the first target data.

As another embodiment, in the single-slot candidate resource set SA, it is determined whether there is a resource group including M single-slot candidate resources with consecutive time-domain positions starting from the first one of slots with available resources in the candidate resources. If there is the resource group, it is determined whether the number of the resource groups including M single-slot candidate resources with consecutive time-domain positions starting from the first slot is greater than or equal to the first threshold value. If the determination result is yes, the resource group is randomly selected from the resource groups including M single-slot candidate resources with consecutive time-domain positions starting from the first slot as the partial transmission resources or the entire transmission resources of the first target data. If it is determined that there is no resource group including M single-slot candidate resources with consecutive time-domain positions starting from the first slot, or if there is a resource group including M single-slot candidate resources with consecutive time-domain positions starting from the first slot, but the number of the resource groups including M single-slot candidate resources with consecutive time-domain positions starting from the first slot is less than the first threshold value, then it is determined whether there is a resource group including M single-slot candidate resources with consecutive time-domain positions starting from the second slot after the first slot. If there is the resource group, it is determined whether the number of the resource groups including M single-slot candidate resources with consecutive time-domain positions starting from the second slot is greater than or equal to the first threshold value. If the determination result is yes, one resource group is randomly selected from the resource group including M single-slot candidate resources with consecutive time-domain positions starting from the second slot as the partial transmission resources or the entire transmission resources of the first target data. If it is determined that there is no resource group including M single-slot candidate resources with consecutive time-domain positions starting from the second slot, or if it is determined that the number of the resource groups including M single-slot candidate resources with consecutive time-domain positions starting from the second slot is less than the first threshold value, then it is determined whether there is a resource group including M single-slot candidate resources with consecutive time-domain positions starting from a next second slot after this second slot. The above steps are repeated until it is determined that there is a resource group including M single-slot candidate resources with consecutive time-domain positions starting from one second slot, and that the number of the resource groups including M single-slot candidate resources with consecutive time-domain positions starting from this second slot is greater than or equal to the first threshold value, one resource group is randomly selected from these resource groups as the partial transmission resources or the entire transmission resources of the first target data. Alternatively, the above steps are repeated until it is determined that there is no resource group including M single-slot candidate resources with consecutive time-domain positions starting from one second slot, or that there is the resource group including M single-slot candidate resources with consecutive time-domain positions starting from one second slot, but the number of the resource groups including M single-slot candidate resources with consecutive time-domain positions starting from this second slot is less than the first threshold value. Among them, the first threshold value is a positive integer greater than or equal to 1.

Optionally, the second slot is adjacent to the first slot, that is, in another embodiment described above, it is determined whether there are the resource groups including M single-slot candidate resources with consecutive time-domain positions starting from the first one of the slots with the available resources among the single-slot candidate resources. If there is no resource group, or if there is the resource group, but the number of the resource groups is less than the first threshold value, the above determination is repeated from the adjacent next slot of the first one of the slots until a resource group that satisfies the conditions is selected as the partial transmission resources or the entire transmission resources of the first target data, or until it is determined that there is no resource group that satisfied the above conditions starting from the last one of the slots with the available resources among the single-slot candidate resources.

Optionally, when the slot candidate resource includes the single-slot candidate resource, the selecting the transmission resource for the first target data from the candidate resource set includes:

in the candidate resource set, if the number of the resource groups satisfying the first target condition is less than the first preset threshold value, and if a number of resource groups satisfying a second target condition is greater than or equal to the first preset threshold value, randomly selecting one resource group from the resource groups satisfying the second target condition as the partial transmission resources or entire transmission resources of the first target data.

If it is determined whether there is no resource group in the single-slot candidate resource set SA that satisfies the first target condition, or if there is the resource group that satisfies the first target condition, or if the number of the resource groups that satisfy the first target condition is less than the first threshold value, then it is determined whether there is a resource group that satisfies the second target condition in the single-slot candidate resource set SA. If there is the resource group, it is determined whether the number of the resource groups that satisfy the second target condition is greater than or equal to the first threshold value. If so, one resource group is randomly selected from the resource groups that satisfy the second target condition as the partial transmission resources or entire transmission resources of the first target data.

Optionally, the resource groups satisfying the second target condition is one of followings: a resource group including K single-slot candidate resources with consecutive time-domain positions; a resource group including K single-slot candidate resources with consecutive time-domain positions starting from a first slot; and a resource group including K single-slot candidate resources with consecutive time-domain positions starting from a second slot; wherein K is less than M, and K is greater than or equal to 1; M is a configured number of consecutive repeated transmissions of the first target data; the first slot is a first one of slots with available resources in the candidate resource; and the second slot is after the first slot.

Determined whether there is the resource group that satisfies the second target condition in the single-slot candidate resource set SA is to, determine whether there is the resource group in the single-slot candidate resource set SA that satisfies the following conditions: the resource group including K single-slot candidate resources with consecutive time-domain positions; the resource group including K single-slot candidate resources with consecutive time-domain positions starting from the first one of the slots with available resources in the candidate resource; and the resource group including K single-slot candidate resources with consecutive time-domain positions starting from the second slot after the first one of the slots with available resources in the candidate resource. Among them, K is less than M and K is greater than or equal to 1.

If there is the resource group that satisfies the second target condition mentioned above in the single-slot candidate resource set SA, and the number of the resource groups that satisfy the second target condition is greater than or equal to the first threshold value, then one resource group is randomly selected from the resource groups that satisfy the second target condition as the partial transmission resources or entire transmission resources of the first target data. Specifically, if K is less than N, the resource group randomly selected from the above resource groups that satisfy the second target condition is used as the transmission resource for the first K transmissions of the first target data, or the resource group randomly selected from the resource groups that satisfy the first target condition is used as the transmission resource for the K transmissions of the target data. If K is equal to N, then the resource group randomly selected from the resource groups that satisfy the first target condition is used as the entire transmission resources of the first target data, that is, the randomly selected resource group is used for the initial transmission and/or retransmission of the first target data.

As an embodiment, in the single-slot candidate resource set SA, it is determined whether there is a resource group including K single-slot candidate resources with consecutive time-domain positions. If there is the resource group, it is determined whether the number of the resource groups including K single-slot candidate resources with consecutive time-domain positions is greater than or equal to the first threshold value. If the determination result is yes, one resource group is randomly selected from the resource groups including K single-slot candidate resources with consecutive time-domain positions as the partial transmission resources or the entire transmission resources of the first target data.

Among them, K is less than M and K is greater than or equal to 1. It should be noted that it takes a value less than M for K first, and then performs the steps in the above embodiment. If it is determined that there is no resource group including K single-slot candidate resources with consecutive time-domain positions in the single-slot candidate resource set SA, or if there is the resource group including K single-slot candidate resources with consecutive time-domain positions, but the number of the resource groups including K single-slot candidate resources with consecutive time-domain positions is less than the first threshold value, then the K value is further reduced and the above steps are repeated until a resource group that satisfies the conditions is selected as the partial transmission resources or the entire transmission resources of the first target data, or until the K value is equal to 1.

As another embodiment, in the single-slot candidate resource set SA, it is determined whether there is a resource group including K single-slot candidate resources with consecutive time-domain positions starting from the first one of slots with available resources in the candidate resources. If there is the resource group, it is determined whether the number of the resource groups including K single-slot candidate resources with consecutive time-domain positions starting from the first slot is greater than or equal to the first threshold value. If the determination result is yes, the resource group is randomly selected from the resource groups including K single-slot candidate resources with consecutive time-domain positions starting from the first slot as the partial transmission resources or the entire transmission resources of the first target data. If it is determined that there is no resource group including K single-slot candidate resources with consecutive time-domain positions starting from the first slot, or if there is a resource group including K single-slot candidate resources with consecutive time-domain positions starting from the first slot, but the number of the resource groups including K single-slot candidate resources with consecutive time-domain positions starting from the first slot is less than the first threshold value, then it is determined whether there is a resource group including K single-slot candidate resources with consecutive time-domain positions starting from the second slot after the first slot. If there is the resource group, it is determined whether the number of the resource groups including K single-slot candidate resources with consecutive time-domain positions starting from the second slot is greater than or equal to the first threshold value. If the determination result is yes, one resource group is randomly selected from the resource group including K single-slot candidate resources with consecutive time-domain positions starting from the second slot as the partial transmission resources or the entire transmission resources of the first target data. If it is determined that there is no resource group including K single-slot candidate resources with consecutive time-domain positions starting from the second slot, or if it is determined that the number of the resource groups including K single-slot candidate resources with consecutive time-domain positions starting from the second slot is less than the first threshold value, then it is determined whether there is the resource group including K single-slot candidate resources with consecutive time-domain positions starting from a next second slot after this second slot. The above steps are repeated until it is determined that there is the resource group including K single-slot candidate resources with consecutive time-domain positions starting from one second slot, and that the number of the resource groups including K single-slot candidate resources with consecutive time-domain positions starting from this second slot is greater than or equal to the first threshold value, one resource group is randomly selected from these resource groups as the partial transmission resources or the entire transmission resources of the first target data. Alternatively, the above steps are repeated until it is determined that there is no resource group including K single-slot candidate resources with consecutive time-domain positions starting from one second slot, or that there is the resource group including K single-slot candidate resources with consecutive time-domain positions starting from one second slot, but the number of the resource groups including K single-slot candidate resources with consecutive time-domain positions starting from this second slot is less than the first threshold value.

Optionally, the second slot is adjacent to the first slot, that is, in another embodiment described above, it is determined whether there are the resource groups including K single-slot candidate resources with consecutive time-domain positions starting from the first one of the slots with the available resources among the single-slot candidate resources. If there is no resource group, or if there is the resource group, but the number of the resource groups is less than the first threshold value, the above determination is repeated from the adjacent next slot of the first one of the slots until a resource group that satisfies the conditions is selected as the partial transmission resources or the entire transmission resources of the first target data, or until it is determined that there is no resource group that satisfied the above conditions starting from the last one of the slots with the available resources among the single-slot candidate resources. Among them, K is less than M and K is greater than or equal to 1.

Specifically, it takes a value less than M for K first, and then performs the steps in the above embodiment, that is, it is determined whether there are the resource groups including K single-slot candidate resources with consecutive time-domain positions starting from the first slot in the single-slot candidate resource set SA. If there is the resource group, it is determined whether the number of the resource groups including K single-slot candidate resources with consecutive time-domain positions starting from the first slot is greater than or equal to the first threshold value. If no, it is determined whether there are the resource groups including K single-slot candidate resources with consecutive time-domain positions starting from the second slot after the first slot. If there is the resource group, it is determined whether the number of the resource groups including K single-slot candidate resources with consecutive time-domain positions starting from the second slot is greater than or equal to the first threshold value, until it is determined that there are the resource groups including K single-slot candidate resources with consecutive time-domain positions starting from a certain second slot after the first slot, and the number of the resource groups is greater than or equal to the first threshold value, then the resource group is randomly selected from these resource groups as the partial transmission resources or the entire transmission resources of the first target data. Or, until it is determined that there is no resource group including K single-slot candidate resources with consecutive time-domain positions starting from any second slot, or, there is the resource group including K single-slot candidate resources with consecutive time-domain positions starting from one second slot, but the number of the resource groups including K single-slot candidate resources with consecutive time-domain positions starting from this second slot is less than the first threshold value, then the K value is further reduced and the above steps are repeated until it is determined that there is the resource group including K single-slot candidate resources with consecutive time-domain positions starting from the first slot, and the number of the resource groups is greater than or equal to the first threshold value, and then one resource group is randomly selected from these resource groups as the partial transmission resources or the entire transmission resources of the first target data. Or, until it is determined that there is the resource group including K single-slot candidate resources with consecutive time-domain positions starting from the second slot, and the number of the resource groups is greater than or equal to the first threshold value, and then one resource group is randomly selected from these resource groups as the partial transmission resources or the entire transmission resources of the first target data. Or, until the K value is equal to 1.

Optionally, K equals M minus a first gradient value; and the first gradient value is a positive integer greater than or equal to 1. That is to say, in the process of selecting the resource groups that satisfy the second target condition mentioned above, the selection is made by gradually reducing the K value according to the first gradient value, and optionally, the first gradient value is 1.

Optionally, the method further includes:

if a number of single-slot candidate resources with consecutive time-domain positions included in a resource group selected for the first target data is equal to a number of transmissions of the first target data, determining the resource group for transmitting the first target data; and

if a number of single-slot candidate resources with consecutive time-domain positions included in the resource group selected for the first target data is less than the number of transmissions of the first target data, selecting remaining transmission resources for the first target data according to a retransmission method of the first terminal.

That is to say, in the single-slot candidate resource set, one resource group of the resource groups that satisfy the first target condition is randomly selected as the transmission resource of the first target data, if the number (M) of the single-slot candidate resources with consecutive time-domain positions included in the resource group selected for the first target data is equal to the number (N) of transmissions of the first target data, then the resource group selected for the first target data is determined to be used for the initial transmission and/or the retransmission of the first target data. Alternatively, in the single-slot candidate resource set, one resource group of the resource groups that satisfy the second target condition is randomly selected as the transmission resource of the first target data, if the number (K) of the single-slot candidate resources with consecutive time-domain positions included in the resource group selected for the first target data is equal to the number (N) of transmissions of the first target data, then the resource group selected for the first target data is determined to be used for the initial transmission and/or the retransmission of the first target data.

In the single-slot candidate resource set, one resource group of the resource groups that satisfy the first target condition is randomly selected as the transmission resource of the first target data, if the number (M) of the single-slot candidate resources with consecutive time-domain positions included in the resource group selected for the first target data is less than the number (N) of transmissions of the first target data, then the resource group selected for the first target data is determined to be used as the transmission resources for the first M transmissions of the first target data or as the transmission resources for the M transmissions of the first target data, and the remaining transmission resources is further selected for the first target data according to the retransmission method of the first terminal. Alternatively, in the single-slot candidate resource set, one resource group of the resource groups that satisfy the second target condition is randomly selected as the transmission resource of the first target data, if the number (K) of the single-slot candidate resources with consecutive time-domain positions included in the resource group selected for the first target data is equal to the number (N) of transmissions of the first target data, then the resource group selected for the first target data is determined to be used as the transmission resources for the first K transmissions of the first target data or as the transmission resources for the K transmissions of the first target data, and the remaining transmission resources is further selected for the first target data according to the retransmission method of the first terminal.

When the resource group selected for the first target data is used as the transmission resources for the first M transmissions of the first target data or as the transmission resources for the M transmissions of the first target data, selecting the remaining transmission resources for the first target data according to the retransmission method of the first terminal includes:

when the first terminal adopts retransmission based on hybrid automatic repeat request (HARQ) feedback and satisfies HARQ round trip time (RTT), if the number of the resource groups satisfying the third target condition in the candidate resources, except for the resource groups selected for the first target data, is greater than a second preset threshold value, one resource group is randomly selected from the resource groups satisfying the third target condition as the remaining transmission resource.

The third target condition includes at least one of the following: a resource group including M single-slot candidate resources with consecutive time-domain positions; a resource group including M single-slot candidate resources with consecutive time-domain positions starting from the third slot; and a resource group including M single-slot candidate resources with consecutive time-domain positions starting from the fourth slot.

Among them, M is configured number of consecutive repeated transmissions of the first target data. The third slot is the first one of slots with available resources in the candidate resources, except for the resource groups selected for the first target data. The fourth slot is after the third slot.

It should be noted that after randomly selecting one resource group from the resource groups that satisfy the first target condition as the partial transmission resources of the first target data, one resource group is randomly selected from the resource groups that satisfy the third target condition as the transmission resources for the next M transmissions of the first target data. If remaining transmission resources need to be selected for the first target data after the next M transmissions, it continues to select the remaining transmission resources from the resource groups that satisfy the next third target condition until all transmissions of the first target data are completed.

For example, if M is equal to 3 and N is equal to 6, when the first three transmissions or the three transmissions of the first target data is performed by using the resource groups selected for the first target data mentioned above, one resource group is randomly selected from the resource groups that satisfy the third target condition as the transmission resources of remaining three transmissions. For another example, if M is equal to 3 and N is equal to 5, when the first three transmissions or the three transmissions of the first target data is performed by using the resource groups selected for the first target data mentioned above, one resource group is randomly selected from the resource groups that satisfy the third target condition as the transmission resources of remaining two transmissions. For another example, if M is equal to 2 and N is equal to 5, when the first two transmissions or the two transmissions of the first target data is performed by using the resource groups selected for the first target data mentioned above, one resource group is randomly selected from the resource groups that satisfy the third target condition as the transmission resources of remaining two transmissions. Then, from the candidate resources, except for the resource groups selected for the first target data (including two resource groups for two transmissions), if it is further determined that the number of the resource groups that satisfy the next third target condition is greater than the second preset threshold value, one resource group is randomly selected from the resource groups that satisfy the next third target condition as the transmission resources of the remaining one transmission.

It should be noted that the process of randomly selecting one resource group from the resource groups that satisfy the third target condition as the transmission resources of the first target data is similar to the process of randomly selecting one resource group from the resource groups that satisfy the first target condition as the transmission resources of the first target data, and which will not be repeated here.

When the first terminal adopts the retransmission based on HARQ feedback and satisfies HARQ round trip time (RTT), randomly selecting the remaining transmission resources for the first target data in the candidate resources, except for the resource groups selected for the first target data, is to randomly select the remaining transmission resources for the first target data from the single-slot candidate resources after randomly selecting one resource group from the resource groups that satisfy the first target condition as the partial transmission resources of the first target data.

For example, if M is equal to 3 and N is equal to 5, when the first three transmissions or the three transmissions of the first target data is performed by using the resource groups selected for the first target data mentioned above, one resource group is randomly selected from the remaining single-slot candidate resource set as the transmission resources of remaining two transmissions.

In the case of blind retransmission adopted by the first terminal, in the candidate resources, if the number of resource groups satisfying the third target condition is greater than the second preset threshold value before the resource group selected for the first target data, and/or after the resource group selected for the first target data, one resource group is randomly selected from the resource groups satisfying the third target condition as the remaining transmission resource.

The third target condition includes at least one of the following: a resource group including M single-slot candidate resources with consecutive time-domain positions; a resource group including M single-slot candidate resources with consecutive time-domain positions starting from the third slot; and a resource group including M single-slot candidate resources with consecutive time-domain positions starting from the fourth slot.

Among them, M is configured number of consecutive repeated transmissions of the first target data. The third slot is the first one of slots with available resources in the candidate resources, except for the resource groups selected for the first target data. The fourth slot is after the third slot.

It should be noted that after randomly selecting one resource group from the resource groups that satisfy the first target condition as the partial transmission resources of the first target data, one resource group is randomly selected from the resource groups that satisfy the third target condition as the transmission resources for the next M transmissions of the first target data (the resource groups that satisfy the third target condition are before this randomly selected resource group, and/or, after this randomly selected resource group). If remaining transmission resources need to be selected for the first target data after the next M transmissions, it continues to select the remaining transmission resources from the resource groups that satisfy the next third target condition until all transmissions of the first target data are completed.

For example, if M is equal to 3 and N is equal to 6, when the first three transmissions or the three transmissions of the first target data is performed by using the resource groups selected for the first target data mentioned above, one resource group is randomly selected from the resource groups that satisfy the third target condition as the transmission resources of remaining three transmissions. Among them, the resource group randomly selected from the resource groups that satisfy the third target condition is before or after the resource group for the first three transmissions or the three transmissions of the first target data. For another example, if M is equal to 3 and N is equal to 5, when the first three transmissions or the three transmissions of the first target data is performed by using the resource groups selected for the first target data mentioned above, one resource group is randomly selected from the resource groups that satisfy the third target condition as the transmission resources of remaining two transmissions. Among them, the resource group randomly selected from the resource groups that satisfy the third target condition is before or after the resource group for the first three transmissions or the three transmissions of the first target data. For another example, if M is equal to 3 and N is equal to 7, when the first three transmissions or the three transmissions of the first target data is performed by using the resource groups selected for the first target data mentioned above, one resource group is randomly selected from the resource groups that satisfy the third target condition as the transmission resources of remaining three transmissions. Among them, the resource group randomly selected from the resource groups that satisfy the third target condition is before or after the resource group for the first three transmissions or the three transmissions of the first target data. Then, from the candidate resources, except for the resource groups selected for the first target data (including two resource groups for three transmissions), if it is further determined that the number of the resource groups that satisfy the next third target condition is greater than the second preset threshold value, one resource group is randomly selected from the resource groups that satisfy the next third target condition as the transmission resources of the remaining one transmission. The transmission resources of the remaining one transmission is before the resource group randomly selected from the resource groups that satisfy the third target condition, or the transmission resources of the remaining one transmission is after the resource group randomly selected from the resource groups that satisfy the third target condition.

When the resource group selected for the first target data is used as the transmission resources for the first K transmissions of the first target data or as the transmission resources for the K transmissions of the first target data, selecting the remaining transmission resources for the first target data according to the retransmission method of the first terminal includes:

when the first terminal adopts retransmission based on HARQ feedback and satisfies HARQ round trip time (RTT), if the number of the resource groups satisfying the fourth target condition in the candidate resources, except for the resource groups selected for the first target data, is greater than the second preset threshold value, one resource group is randomly selected from the resource groups satisfying the fourth target condition as the remaining transmission resource.

The fourth target condition includes at least one of the following: a resource group including K single-slot candidate resources with consecutive time-domain positions; a resource group including K single-slot candidate resources with consecutive time-domain positions starting from the third slot; and a resource group including K single-slot candidate resources with consecutive time-domain positions starting from the fourth slot.

Among them, K is less than M, and K is greater than or equal to 1. The third slot is the first one of slots with available resources in the candidate resources, except for the resource groups selected for the first target data. The fourth slot is after the third slot.

It should be noted that after randomly selecting one resource group from the resource groups that satisfy the second target condition as the partial transmission resources of the first target data, one resource group is randomly selected from the resource groups that satisfy the fourth target condition as the transmission resources for the next K transmissions of the first target data. If remaining transmission resources need to be selected for the first target data after the next K transmissions, it continues to select the remaining transmission resources from the resource groups that satisfy the next fourth target condition until all transmissions of the first target data are completed.

For example, if K is equal to 3 and N is equal to 6, when the first three transmissions or the three transmissions of the first target data is performed by using the resource groups selected for the first target data mentioned above, one resource group is randomly selected from the resource groups that satisfy the fourth target condition as the transmission resources of remaining three transmissions. For another example, if K is equal to 3 and N is equal to 5, when the first three transmissions or the three transmissions of the first target data is performed by using the resource groups selected for the first target data mentioned above, one resource group is randomly selected from the resource groups that satisfy the fourth target condition as the transmission resources of remaining two transmissions. For another example, if K is equal to 3 and N is equal to 7, when the first three transmissions or the three transmissions of the first target data is performed by using the resource groups selected for the first target data mentioned above, one resource group is randomly selected from the resource groups that satisfy the fourth target condition as the transmission resources of remaining three transmissions. Then, from the candidate resources, except for the resource groups selected for the first target data (including two resource groups for three transmissions), if it is further determined that the number of the resource groups that satisfy the next fourth target condition is greater than the second preset threshold value, one resource group is randomly selected from the resource groups that satisfy the next fourth target condition as the transmission resources of the remaining one transmission.

It should be noted that the process of randomly selecting one resource group from the resource groups that satisfy the fourth target condition as the transmission resources of the first target data is similar to the process of randomly selecting one resource group from the resource groups that satisfy the second target condition as the transmission resources of the first target data, and which will not be repeated here.

When the first terminal adopts the retransmission based on HARQ feedback and satisfies HARQ round trip time (RTT), randomly selecting the remaining transmission resources for the first target data in the candidate resources, except for the resource groups selected for the first target data, is to randomly select the remaining transmission resources for the first target data from the single-slot candidate resources after randomly selecting one resource group from the resource groups that satisfy the second target condition as the partial transmission resources of the first target data.

For example, if M is equal to 3 and N is equal to 5, when the first three transmissions or the three transmissions of the first target data is performed by using the resource groups selected for the first target data mentioned above, one resource group is randomly selected from the remaining single-slot candidate resource set as the transmission resources of remaining two transmissions.

In the case of blind retransmission adopted by the first terminal, in the candidate resources, if the number of resource groups satisfying the fourth target condition is greater than the second preset threshold value before the resource group selected for the first target data, and/or after the resource group selected for the first target data, one resource group is randomly selected from the resource groups satisfying the fourth target condition as the remaining transmission resource.

The fourth target condition includes at least one of the following: a resource group including M single-slot candidate resources with consecutive time-domain positions; a resource group including M single-slot candidate resources with consecutive time-domain positions starting from the third slot; and a resource group including M single-slot candidate resources with consecutive time-domain positions starting from the fourth slot.

Among them, M is configured number of consecutive repeated transmissions of the first target data. The third slot is the first one of slots with available resources in the candidate resources, except for the resource groups selected for the first target data. The fourth slot is after the third slot.

It should be noted that after randomly selecting one resource group from the resource groups that satisfy the second target condition as the partial transmission resources of the first target data, one resource group is randomly selected from the resource groups that satisfy the fourth target condition as the transmission resources for the next M transmissions of the first target data (the resource groups that satisfy the fourth target condition are before this randomly selected resource group, and/or, after this randomly selected resource group). If remaining transmission resources need to be selected for the first target data after the next M transmissions, it continues to select the remaining transmission resources from the resource groups that satisfy the next fourth target condition until all transmissions of the first target data are completed.

For example, if M is equal to 3 and N is equal to 6, when the first three transmissions or the three transmissions of the first target data is performed by using the resource groups selected for the first target data mentioned above, one resource group is randomly selected from the resource groups that satisfy the fourth target condition as the transmission resources of remaining three transmissions. Among them, the resource group randomly selected from the resource groups that satisfy the fourth target condition is before or after the resource group for the first three transmissions or the three transmissions of the first target data. For another example, if M is equal to 3 and N is equal to 5, when the first three transmissions or the three transmissions of the first target data is performed by using the resource groups selected for the first target data mentioned above, one resource group is randomly selected from the resource groups that satisfy the fourth target condition as the transmission resources of remaining two transmissions. Among them, the resource group randomly selected from the resource groups that satisfy the fourth target condition is before or after the resource group for the first three transmissions or the three transmissions of the first target data. For another example, if M is equal to 3 and N is equal to 5, when the first three transmissions or the three transmissions of the first target data is performed by using the resource groups selected for the first target data mentioned above, one resource group is randomly selected from the resource groups that satisfy the fourth target condition as the transmission resources of remaining three transmissions. Among them, the resource group randomly selected from the resource groups that satisfy the fourth target condition is before or after the resource group for the first three transmissions or the three transmissions of the first target data. Then, from the candidate resources, except for the resource groups selected for the first target data (including two resource groups for three transmissions), if it is further determined that the number of the resource groups that satisfy the next fourth target condition is greater than the second preset threshold value, one resource group is randomly selected from the resource groups that satisfy the next fourth target condition as the transmission resources of the remaining one transmission. The transmission resources of the remaining one transmission is before the resource group randomly selected from the resource groups that satisfy the fourth target condition, or the transmission resources of the remaining one transmission is after the resource group randomly selected from the resource groups that satisfy the fourth target condition.

There is a specific embodiment below to illustrate the process of selecting the transmission resources for the first target data when the slot candidate resources include the single-slot candidate resources:

Step 1: determining whether there is a resource group including M single-slot candidate resources with consecutive time-domain positions in the single-slot candidate resource set SA;

Step 2-1, if the number of the resource groups including M single-slot candidate resources with consecutive time-domain positions is greater than or equal to the first threshold value, then randomly selecting one resource group from the resource groups including M single-slot candidate resources with consecutive time-domain positions for the first M transmissions of the first target data, or for the M transmissions of the first target data;

Step 2-2, if the number of the resource groups including M single-slot candidate resources with consecutive time-domain positions is less than the first threshold value, updating M to K, wherein K is obtained by subtracting 1 (the first gradient value) from M. Returning to step 1 and step 2-1 until K is equal to 1, or until the number of the resource groups including K single-slot candidate resources with consecutive time-domain positions is greater than or equal to the first threshold value. Then, randomly select one resource group from the resource groups including K single-slot candidate resources with consecutive time-domain positions for the first K transmissions of the first target data, or for the K transmissions of the first target data;

Step 3-1, if M=N or K=N, determining, by the UE, the randomly selected resource group for the initial transmission and/or retransmission of the first target data;

Step 3-2, if M<N, or K<N, then:

if the UE adopts retransmission based on the HARQ feedback and satisfies HARQ RTT, continuing to perform step 1 and step 2 (including step 2-1 and step 2-2) for the remaining N-M (or N-K) resources, or continuing to perform random resource selection for the remaining N-M (or N-K) resources;

if the UE adopts blind retransmission, continuing to perform step 1 and step 2 (including step 2-1 and step 2-2) for the remaining N-M (or N-K) resources, or continuing to perform random resource selection for the remaining N-M (or N-K) resources, before the resource group randomly selected from the resource groups including M (or K) single-slot candidate resources with consecutive time-domain positions, and/or after the resource group randomly selected from the resource groups including M (or K) single-slot candidate resources with consecutive time-domain positions.

Referring to FIG. 2, if the UE determines to use the single-slot candidate resource Rx,y as the granularity, after performing resource exclusion, the single-slot candidate resource set SA is obtained. The UE reports the single-slot candidate resource set SA to the MAC layer. Taking the first target data occupying one sub-channel for transmission and the time-frequency resource information in the single-slot candidate resource set SA being the index value as an example, the index value of the single-slot candidate resource set SA is {1, 3, 4, 5,...}.

Taking M=2 and N=2 as an example, the MAC layer determines that there is the resource group including M single-slot candidate resources with consecutive time-domain positions in the single-slot candidate resource set SA (with the first threshold value of 1), and one of the resource groups is randomly selected as the transmission resource of the first target data. For example, the resource with the index of 1 in the single-slot candidate resource set SA is used for the initial transmission of the current Transport Block (TB), and the resource with the index of 7 is selected for the retransmission of the current TB.

Referring to FIG. 3, the index values of the single-slot candidate resource set SA in FIG. 3 are {1, 3, 4, 5,...}. Taking M=4 and N=4 as an example, if the MAC layer determines that there is no resource group including M single-slot candidate resources with consecutive time-domain positions (with the first threshold value of 1) in the single slot candidate resource set SA, it continues to determine whether the single-slot candidate resource set SA has the resource group including K (K=M-1) single-slot candidate resources with consecutive time-domain positions, that is, it continues to determine whether the single-slot candidate resource set SA has the resource group that includes 3 single-slot candidate resources with consecutive time-domain positions. As shown in FIG. 3, if the determination result is yes, one of the resource groups is randomly selected as the transmission resource of the first target data. For example, the resource with the index of 1 in the single-slot candidate resource set SA is used for the initial transmission of the current TB, and the resources with the index of 7 and the index of 12 are selected for the initial transmission of the current TB.

Since the current first data packet requires four transmissions, but no consecutive four transmission resources can be selected, for the fourth transmission, if the UE adopts blind retransmission, it can randomly select after the third transmission resource (with the index of 12). If the retransmission based on HARQ feedback is adopted and HARQ RTT is satisfied, the UE needs to select resources. For example, under the condition of satisfying HARQ RTT limit, the transmission resource for the fourth transmission is selected with the index of 42.

There is another specific embodiment below to illustrate the process of selecting the transmission resources for the first target data when the slot candidate resources include the single-slot candidate resources:

Step 1: determining whether a resource group including M single-slot candidate resources with consecutive time-domain positions can be selected starting from the first one of the slots with the available resources in the single-slot candidate resource set SA;

Step 2-1, if the resource group can be selected, determining whether the number of the resource groups including M single-slot candidate resources with consecutive time-domain positions starting from the first one of the slots is greater than or equal to the first threshold value, then starting from the first one of the slots, randomly selecting one resource group from the resource groups including M single-slot candidate resources with consecutive time-domain positions as the transmission resources of the first M transmissions of the first target data, or as the transmission resources of the M transmissions of the first target data;

Step 2-2, if the resource group cannot be selected, determining whether a resource group including M single-slot candidate resources with consecutive time-domain positions can be selected starting from the second one of the slots with the available resources in the single-slot candidate resource set SA, and the number of the resource groups including M single-slot candidate resources with consecutive time-domain positions starting from the second one of the slots is greater than or equal to the first threshold value, until the resource groups including M single-slot candidate resources with consecutive time-domain positions can be selected, and the selection of M single-slot candidate resource sets is completed;

Step 2-3, if it is still not possible to select the resource group including M single-slot candidate resources with consecutive time-domain positions through traversing the slots with the available resources in the single-slot candidate resource set SA, then updating M to K, where K is obtained by subtracting 1 (the first gradient value) from M. Returning to step 1, step 2-1, and step 2-3 until K is equal to 1. Alternatively, if the resource group including K single-slot candidate resources with consecutive time-domain positions starting from one slot is selected, and the number of the resource groups is greater than or equal to the first threshold value, randomly selecting one resource group from the resource groups including K single-slot candidate resources with consecutive time-domain positions starting from one slot as the transmission resources for the first K transmissions of the first target data, or the transmission resources for the K transmissions of the first target data;

Step 3-1, if M=N or K=N, determining, by the UE, the randomly selected resource group for the initial transmission and/or retransmission of the first target data;

Step 3-2, if M<N, or K<N, then:

if the UE adopts retransmission based on the HARQ feedback and satisfies HARQ RTT, continuing to perform step 1 and step 2 (including step 2-1, step 2-2 and step 2-3) for the remaining N-M (or N-K) resources, or continuing to perform random resource selection for the remaining N-M (or N-K) resources; and

if the UE adopts blind retransmission, continuing to perform step 1 and step 2 (including step 2-1, step 2-2 and step 2-3) for the remaining N-M (or N-K) resources, or continuing to perform random resource selection for the remaining N-M (or N-K) resources, before the resource group randomly selected from the resource groups including M (or K) single-slot candidate resources with consecutive time-domain positions, and/or after the resource group randomly selected from the resource groups including M (or K) single-slot candidate resources with consecutive time-domain positions.

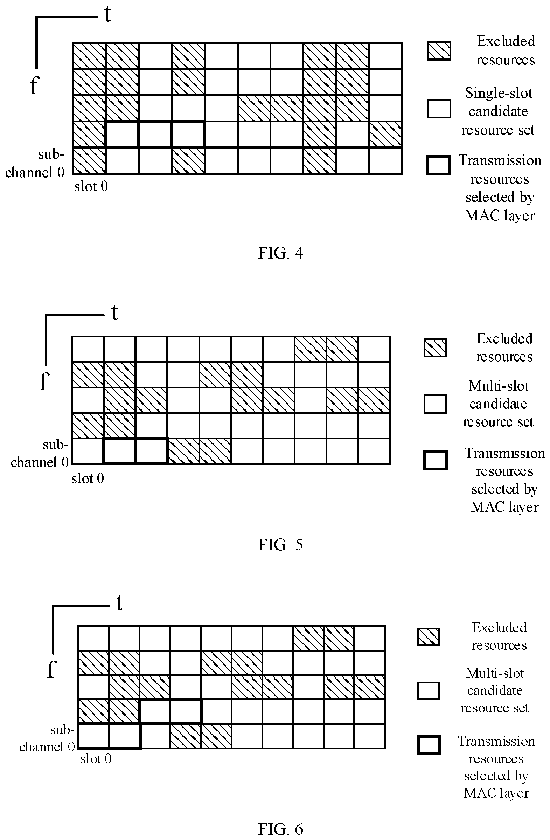

Referring to FIG. 4, if the UE determines to use the single-slot candidate resource Rx,y as the granularity, after performing resource exclusion, the single-slot candidate resource set SA is obtained. The UE reports the single-slot candidate resource set SA to the MAC layer. Taking the first target data occupying one subchannel for transmission and the time-frequency resource information in the single-slot candidate resource set SA being the index value as an example, the index value of the single-slot candidate resource set SA is {6,7,11,12,...}.

Taking M=3 and N=3 as an example, the MAC layer determines that the resource group including M single-slot candidate resources with consecutive time-domain positions can be selected starting from the first one of the slots with the available resources in the single-slot candidate resource set SA (with the first threshold value of 1), and one of the resource groups is randomly selected as the transmission resource of the first target data. For example, the resource with the index of 7 in the single-slot candidate resource set SA is used for the initial transmission of the current Transport Block (TB), and the resources with the index of 12 and the index of 17 are selected for the retransmission of the current TB.

The process of selecting the transmission resources for the first target data when the slot candidate resources include the multi-slot candidate resources is illustrated below.

Optionally, when the slot candidate resource includes the multi-slot candidate resource, the selecting the transmission resource for the first target data from the candidate resource set includes:

selecting a target multi-slot candidate resource in the candidate resource set as partial transmission resources or entire transmission resources of the first target data. In the multi-slot candidate resource set SA, one target multi-slot candidate resource is selected as the partial transmission resources or the entire transmission resources of the first target data.

Among them, whether the target multi-slot candidate resource is used as the partial transmission resources of the first target data or as the entire transmission resources of the first target data needs to be determined based on the number of the single-slot candidate resources included in the target multi-slot candidate resources and the total number N of transmissions of the first target data.

Optionally, the target multi-slot candidate resource include at least one of followings: a multi-slot candidate resource that is randomly selected; and a multi-slot candidate resource that is most advanced in terms of time.

That is to say, in the multi-slot candidate resource set SA, one multi-slot candidate resource can be randomly selected as the transmission resources for the first M transmissions of the first target data, or as the transmission resource for the M transmissions of the first target data. Alternatively, one multi-slot candidate resource that is most advanced in terms of time can be selected from the multi-slot candidate resource set SA as the transmission resources for the first M transmissions of the first target data, or as the transmission resources for the M transmissions of the first target data.

Among them, if M is less than N, one resource group is randomly selected from the resource groups that satisfy the first target condition as the transmission resources for the first M transmissions of the first target data, or one resource group is randomly selected from the resource groups that satisfy the first target condition as the transmission resources for the M transmissions of the first target data. If M is equal to N, then one resource group is randomly selected from the resource groups that satisfy the first target condition as the entire transmission resources of the first target data, that is, the randomly selected resource group is used for the initial transmission and/or retransmission of the first target data.

Optionally, the method further includes:

if a number of single-slot candidate resources included in the target multi-slot candidate resource is equal to a number of transmissions of the first target data, determining the multi-slot candidate resource for transmitting the first target data;

if a number of single-slot candidate resources included in the target multi-slot candidate resource is less than the number of transmissions of the first target data, selecting remaining transmission resources for the first target data according to a retransmission method of the first terminal.

In the multi-slot candidate resource set SA, the target multi-slot candidate resource is selected as the transmission resources of the first target data. If the number (M) of slots in the target multi-slot candidate resource is equal to the number (N) of transmissions of the first target data, then the target multi-slot candidate resource is determined to be used for the initial transmission and/or retransmission of the first target data. If the number (M) of slots in the target multi-slot candidate resource is less than the number (N) of transmissions of the first target data, then the target multi-slot candidate resource is determined as the transmission resources for the first M transmissions of the first target data or as the transmission resources for the M transmissions of the first target data. Furthermore, according to the retransmission method of the first terminal, the remaining transmission resources are selected for the first target data.

The selecting the remaining transmission resources for the first target data according to the retransmission method of the first terminal after randomly selecting one multi-slot candidate resource in the multi-slot candidate resource set SA as the transmission resources for the first M transmissions of the first target data, or as the transmission resources for the M transmissions of the first target data, includes:

when the first terminal adopts the retransmission based on HARQ feedback and satisfies HARQ RTT, in the multi-slot candidate resource set SA, except for the target multi-slot candidate resource set, it continues to select other multi-slot candidate resources as the remaining W transmission resources of the first target data; W=[(N-M)/M], which means that W is equal to the difference between N and M divided by M and rounded to the nearest integer.

If W is greater than M, in the multi-slot candidate resource set SA, except for the target multi-slot candidate resource set, it continues to select another multi-slot candidate resource as the transmission resources for the second M transmissions of the first target data, and the above steps are repeated until all transmission resources of the first target data are selected.

When the first terminal adopts the blind retransmission, in the multi-slot candidate resource set SA, except for the target multi-slot candidate resource set, it continues to select other multi-slot candidate resources as the remaining W transmission resources of the first target data before and/or after the target multi-slot candidate resource;

$$W=\lceil (N-M)/M \rceil$$

, which means that W is equal to the difference between N and M divided by M and rounded to the nearest integer.

If W is greater than M, in the multi-slot candidate resource set SA, except for the target multi-slot candidate resource set, it continues to select another multi-slot candidate resource as the transmission resources for the second M transmissions of the first target data before and/or after the target multi-slot candidate resource, and the above steps are repeated until all transmission resources of the first target data are selected.

The selecting the remaining transmission resources for the first target data according to the retransmission method of the first terminal after selecting the multi-slot candidate resource that is most advanced in terms of time in the multi-slot candidate resource set SA as the transmission resources for the first M transmissions of the first target data, or as the transmission resources for the M transmissions of the first target data, includes:

when the first terminal adopts the retransmission based on HARQ feedback and satisfies HARQ RTT, in the multi-slot candidate resource set SA, except for the target multi-slot candidate resource set, it continues to select other multi-slot candidate resources as the remaining W transmission resources of the first target data;

$$W=[(N-M)/M]$$ , which means that W is equal to the difference between N and M divided by M and rounded to the nearest integer.

If W is greater than M, in the multi-slot candidate resource set SA, except for the target multi-slot candidate resource set, it continues to select another multi-slot candidate resource as the transmission resources for the second M transmissions of the first target data, and the above steps are repeated until all transmission resources of the first target data are selected.

When the first terminal adopts the blind retransmission, in the multi-slot candidate resource set SA, except for the target multi-slot candidate resource set, it continues to select other multi-slot candidate resources as the remaining W transmission resources of the first target data after the target multi-slot candidate resource; W=[(N-M)/M], which means that W is equal to the difference between N and M divided by M and rounded to the nearest integer.

If W is greater than M, in the multi-slot candidate resource set SA, except for the target multi-slot candidate resource set, it continues to select another multi-slot candidate resource as the transmission resources for the second M transmissions of the first target data after the target multi-slot candidate resource, and the above steps are repeated until all transmission resources of the first target data are selected.

There is a specific embodiment below to illustrate the process of selecting the transmission resources for the first target data when the slot candidate resources include the multi-slot candidate resources:

referring to FIG. 5, if the UE determines to use the multi-slot candidate resource $Rx_M,y$ as the granularity, M is the number of consecutive repeated transmissions of the first target data configured or pre-configured by the higher layer, after performing resource exclusion, the multi-slot candidate resource set SA is obtained. The UE reports the multi-slot candidate resource set SA to the MAC layer. Taking the first target data occupying one sub-channel for transmission, M=2, and the time-frequency resource information in the multi-slot candidate resource set SA being the index value as an example, the index value of the multi-slot candidate resource set SA is {1, 3, 5, 6, 7, 9...}.

Taking N=2 as an example, the MAC layer randomly selects a target multi-slot candidate resource from the multi-slot candidate resource set SA for the transmission of the first target data, for example, selecting the resource with the index of 6 in the multi-slot candidate resource set SA for the initial transmission and/or retransmission of the current TB.

There is another specific embodiment below to illustrate the process of selecting the transmission resources for the first target data when the slot candidate resources include the multi-slot candidate resources:

referring to FIG. 6, if the UE determines to use the multi-slot candidate resource $Rx_M,y$ as the granularity, M is the number of consecutive repeated transmissions of the first target data configured or pre-configured by the higher layer, after performing resource exclusion, the multi-slot candidate resource set SA is obtained. The UE reports the multi-slot candidate resource set SA to the MAC layer. Taking the first target data occupying one sub-channel for transmission, M=2, and the time-frequency resource information in the multi-slot candidate resource set SA being the index value as an example, the index value of the multi-slot candidate resource set SA is {1, 3, 5, 6, 7, 9...}.

Taking N=3 as an example, the MAC layer selects the multi-slot candidate resource that is most advanced in terms of time from the multi-slot candidate resource set SA as the transmission resources for the first M transmissions of the first target data, for example, selecting the multi-slot candidate resource with the index of 1 in the multi-slot candidate resource set SA for the initial transmission and/or the first retransmission of the current TB.

Due to M<N, if the UE adopts the blind retransmission, it can continue to select one multi-slot candidate resource for the transmission of the second retransmission of the first target data after selecting the multi-slot candidate resource with the index of 1. For example, the multi-slot candidate resource with the index of 12 is selected from the multi-slot candidate resource set SA for the second retransmission of the current TB, although the multi-slot candidate resource with the index of 12 actually contains two transmission resources, the UE only needs to occupy one of them for transmission.

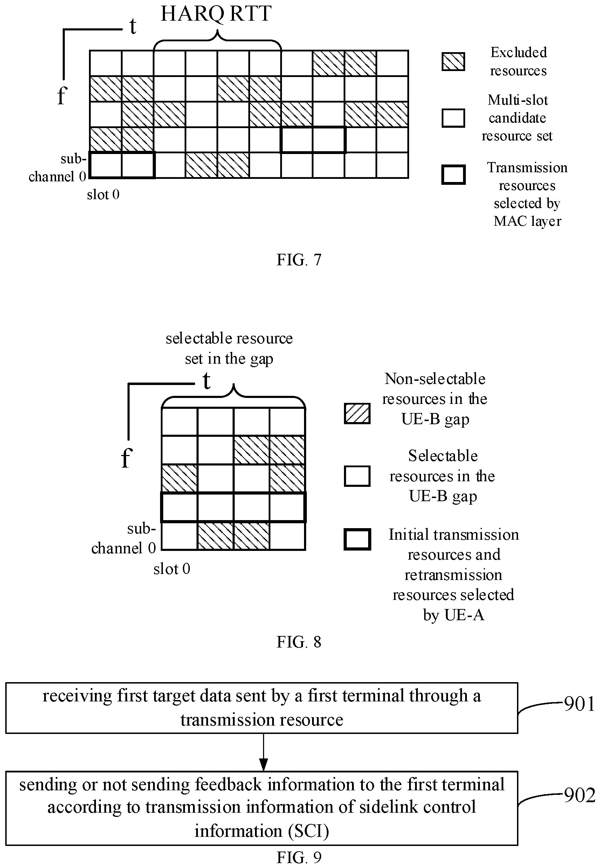

Referring to FIG. 7, if the UE adopts the retransmission based on HARQ feedback, it needs to continue to select one multi-slot candidate resource for the transmission of the second retransmission when satisfying HARQ RTT. For example, the multi-slot candidate resource with the index of 31 is selected from the multi-slot candidate resource set SA for the second retransmission of the current TB, although the multi-slot candidate resource with the index of 31 actually contains two transmission resources, the UE only needs to occupy one of them for transmission.

Optionally, the method further includes: sending to a third terminal at least one of followings:

at least one piece of first gap information, wherein the first gap information is gap information between two adjacent first transmission group sequences;

second gap information, wherein the second gap information includes all first gap information between adjacent first transmission group sequences; and

first indication information, wherein the first indication information is time-frequency position information of at least one gap for indicating the third terminal to perform data transmission;

wherein each piece of the first gap information includes at least one of followings: a first transmission end time of a first target transmission group sequence; a first transmission start time of a second target transmission group sequence; and a gap length between the first transmission end time and the first transmission start time; wherein the first target transmission group sequence and the second target transmission group sequence are two adjacent first transmission group sequences, and the first target transmission group sequence is before the second target transmission group sequence; and

the first transmission group sequence is determined according to a resource group selected for the first target data and remaining transmission resources, or the first transmission group sequence is determined according to a target multi-slot candidate resource and the remaining transmission resources.

In order to ensure that the first terminal can successfully complete the next retransmission after M transmissions, it is best not to interrupt the current channel occupancy time (COT). Therefore, in this embodiment, after transmitting the first target data through the transmission resources, at least one piece of first gap information can also be sent to the third terminal, and the first gap information is the gap information between two adjacent first transmission group sequence. Among them, the first transmission group sequence can be determined based on the resource group selected for the first target data and the remaining transmission resources. Specifically, the resource group selected for the first target data is one transmission group sequence, and the remaining (N-M) transmission resources divided by M equals the first value and the remaining value is less than M. Therefore, the remaining transmission resources can be determined to correspond to the first value plus one transmission group sequence, and the total number of the transmission group sequences is the first value plus two. If M=2 and N=7, then the first transmission group sequence is 4. The first transmission group sequence can also be determined based on the target multi-slot candidate resources and the remaining transmission resources. Specifically, the target multi-slot candidate resources correspond to one transmission group sequence, and the remaining (N-M) transmission resources divided by M equals the first value and the remaining value is less than M. Then, the remaining transmission resources can be determined to correspond to the second value plus one transmission group sequence, and the total number of the transmission group sequences is the second value plus two. If M=3 and N=5, then the first transmission group sequences is 2.

After determining the first transmission group sequence, determining that the first gap information between every two adjacent first transmission group sequences includes at least one of the following: the first transmission end time of the preceding first transmission group sequence of the two adjacent first transmission group sequences; the first transmission end time of the last first transmission group sequence of the two adjacent first transmission group sequences; the gap length between the first transmission end time and the first transmission start time.

After transmitting the first target data through the transmission resources, the second gap information can also be sent to the third terminal, and the second gap information includes the first gap information between all adjacent first transmission groups mentioned above.

After transmitting the first target data through the transmission resource, the first indication information of the time-frequency position information of at least one gap for indicating for data transmission can also be sent to the third terminal.

There is a specific embodiment below to illustrate the process of sending gap information to the terminal:

Please continue to refer to FIG. 3. The index values of the single-slot candidate resource set SA in FIG. 3 are {1, 3, 4, 5,...}, taking M=4, and N=4 as an example, If the MAC layer determines that the single-slot candidate resource set SA does not have a resource group that includes M single-slot candidate resources with consecutive time-domain positions (with a first threshold value of 1), it continues to determine whether the single-slot candidate resource set SA has a resource group that includes M-1 single-slot candidate resources with consecutive time-domain positions. That is, it continues to determine whether the single-slot candidate resource set SA has a resource group that includes 3 single-slot candidate resources with consecutive time-domain positions. As shown in FIG. 3, if the determination result is yes, one of the resource groups is randomly selected as the transmission resource of the first target data. For example, the resource with the index of 1 in the single-slot candidate resource set SA is used for the initial transmission of the current TB, and the resources with the index of 7 and the index of 12 are selected for the retransmission of the current TB.

Since the current first data packet requires four transmissions, but no consecutive 4 transmission resources have been selected, for the fourth transmission, if the UE adopts the blind retransmission, it can randomly select after the third transmission resource (with the index of 12). If the retransmission based on HARQ feedback is used, the UE needs to select resources when satisfying HARQ RTT. For example, when HARQ RTT is satisfied, the resource with the index of 42 is selected as the transmission resource for the fourth transmission.

The UE (first terminal) sends first gap information between its two transmission group sequences (first transmission group sequences) to another UE (third terminal). For example, the first gap information includes the transmission end time (slot 2) of the first one of the transmission group sequences and the gap (5 slots) between the first one of the transmission group sequences and the second one of the transmission group sequences. The other UE (third terminal) waiting to transmit data can consecutively occupy this gap to ensure uninterrupted current COT, so that the first terminal may complete the fourth transmission on slot 8.

There is another specific embodiment below to illustrate the process of sending gap information to the terminal:

if the UE determines to use the multi-slot candidate resource $Rx_M,y$ as the granularity, M is the number of consecutive repeated transmissions of the first target data configured or pre-configured by the higher layer, after performing resource exclusion, the multi-slot candidate resource set SA is obtained. The UE reports the multi-slot candidate resource set SA to the MAC layer. Taking the first target data occupying one sub-channel for transmission, M=2, and the time-frequency resource information in the multi-slot candidate resource set SA being the index value as an example, the index value of the multi-slot candidate resource set SA is {1, 3, 5, 6, 7, 9...}.

Taking N=3 as an example, the MAC layer selects the multi-slot candidate resource that is most advanced in terms of time from the multi-slot candidate resource set SA as the transmission resources for the first M transmissions of the first target data, for example, selecting the multi-slot candidate resource with the index of 1 in the multi-slot candidate resource set SA for the initial transmission and/or the first retransmission of the current TB.

Referring to FIG. 7, if the UE adopts the retransmission based on HARQ feedback, it needs to continue to select one multi-slot candidate resource for the transmission of the second retransmission when satisfying HARQ RTT. For example, the multi-slot candidate resource with the index of 31 is selected from the multi-slot candidate resource set SA for the second retransmission of the current TB, although the multi-slot candidate resource with the index of 31 actually contains two transmission resources, the UE only needs to occupy one of them for transmission.

The UE (first terminal) sends first gap information between its two transmission group sequences (first transmission group sequences) to another UE (third terminal). For example, the first gap information includes the transmission end time (slot 1) of the first one of the transmission group sequences and the gap (4 slots) between the first one of the transmission group sequences and the second one of the transmission group sequences. The other UE (third terminal) waiting to transmit data can consecutively occupy this gap to ensure uninterrupted current COT, so that the first terminal may complete the second retransmission on slot 6.

Optionally, the method further includes:

receiving second indication information sent by a fourth terminal;
determining the transmission resource of the first target data according to the second indication information;
the second indication information includes at least one of followings:

at least one piece of third gap information, wherein the third gap information is gap information between two adjacent second transmission group sequences;
fourth gap information, wherein the fourth gap information includes all third gap information between adjacent second transmission group sequences;
an available resource of candidate resources of the fourth terminal; and
a transmission resource indicated by the fourth terminal for the first terminal to transmit the first target data;
wherein the second transmission group sequence is a transmission group sequence of the second target data transmitted by the fourth terminal according to the candidate resources; each piece of the third gap information includes at least one of followings: a second transmission end time of a third target transmission group sequence; a second transmission start time of a fourth target transmission group sequence; and a gap length between the second transmission end time and the second transmission start time; wherein the third target transmission group sequence and the fourth target transmission group sequence are two adjacent second transmission group sequence; and the third target transmission group sequence is before the fourth target transmission group sequence.

In this embodiment, the first terminal can determine the initial transmission resources and/or retransmission resources of the first target data based on the second indication information sent by another UE (fourth terminal).

The second indication information includes but not limited to one of the followings:

at least one piece of third gap information, wherein the third gap information is gap information between two adjacent second transmission group sequences;
fourth gap information, wherein the fourth gap information includes all third gap information between adjacent second transmission group sequences;
an available resource (optional resources) of a candidate resource set of the fourth terminal; and
transmission resource information indicated by the fourth terminal for the first terminal to transmit the first target data.

The second gap information is the gap information between two adjacent second transmission group sequences. Among them, the second transmission group sequence can be determined through the transmission resource of the second target data transmitted by the fourth terminal according to the candidate resources. The determination process and included contents of the second transmission group sequence are similar to those of the first transmission group sequence mentioned above, and which will not be repeated here.

There is a specific embodiment below to illustrate the process of receiving indication information by a terminal:

referring to FIG. 8, if UE-A (first terminal) receives the second indication information sent by UE-B (fourth terminal), for example, the second indication information includes the gap (4 slots) between two adjacent second transmission group sequences of UE-B, as well as the optional resource set in the gap. Then UE-A can select the initial transmission resource and/or retransmission resource for the first target data from the optional resource set in the gap.

Taking N=4 as an example, the MAC layer selects from the optional resource set in the gap, for example, selecting the resource with slot 0, slot 1, slot 2, slot 3, and the sub-channel of 1 to be used for the initial transmission and/or retransmission of the current TB of UE-A.

Optionally, the method further includes:

receiving feedback information sent by the second terminal on one or more available physical sidelink feedback channel (PSFCH) resources after sending the first target data; wherein a receiving position of the sent feedback information is determined according to transmission information corresponding to the first target data.

After the first terminal sends the first target data to the second terminal through the transmission resources, the first terminal needs to receive the feedback information sent by the second terminal. Therefore, in this embodiment, the first terminal can receive the feedback information sent by the second terminal on one or more available physical sidelink feedback channel (PSFCH) resources after sending the first target data. The feedback information can be acknowledgement (ACK) feedback information or negative acknowledgement (NACK) feedback information, and the specific type of the feedback information is determined by the second terminal.

The receiving position where the first terminal receives the feedback information sent by the second terminal is determined based on the transmission information corresponding to the first target data, and the transmission information includes at least one of the followings: the number of consecutive transmissions of the first target data; the time-frequency resource allocation information of the first target data; the resource reservation period of the first target data; and a hybrid automatic repeat request (HARQ) retransmission method of the first terminal.

As shown in FIG. 9, the embodiment of the present disclosure also provides an information sending method applied to a second terminal, and the method includes:

Step 901: receiving first target data sent by a first terminal through a transmission resource, wherein the transmission resource is selected by the first terminal for the first target data from a candidate resource set, and the candidate resource set is obtained by performing resource exclusion on resources in a resource selection window by using a slot candidate resource as granularity.

It should be noted that in this embodiment, the second terminal is a sidelink UE operating in an unlicensed frequency band. In this step, the physical layer of the first terminal performs resource exclusion on the resources in the resource selection window by using the slot candidate resource as the granularity to obtain the candidate resource set. That is, at least one slot candidate resource is excluded in the resource selection window to obtain the candidate resource set, and the candidate resource set is reported to the medium access control (MAC) layer. After the MAC layer of the first terminal receives the candidate resource set, when selecting resources, the transmission resources for the first target data is selected from the candidate resource set, and the first target data is sent to the second terminal through the transmission resources. The second terminal receives the first target data.

Step 902: sending or not sending feedback information to the first terminal according to transmission information of sidelink control information (SCI).

In this step, after the second terminal receives the first target data, the SCI in the first target data is decoded to obtain the transmission information. After receiving one or more transmissions of the first target data, the feedback information is sent or not sent based on the transmission information.

Optionally, the transmission information includes but not limited to at least one of followings: a number of consecutive transmissions of the first target data; time-frequency resource allocation information of the first target data; a resource reservation period of the first target data; a hybrid automatic repeat request (HARQ) retransmission method of the first terminal; and source identity (source ID) of the first terminal.

Optionally, the sending or not sending the feedback information to the first terminal according to the transmission information of the sidelink control information (SCI) includes:

receiving the first target data on a plurality of slot resources according to the transmission information; and

sending or not sending the feedback information to the first terminal on next one or more available physical sidelink feedback channel (PSFCH) resources after the plurality of slot resources.

Specifically, sending or not sending the feedback information to the first terminal on next one or more available physical sidelink feedback channel (PSFCH) resources after the plurality of slot resources includes: sending acknowledgement feedback information to the first terminal on the next one or more available physical sidelink feedback channel (PSFCH) resources when the first target data is successfully received at least once on the plurality of slot resources; and sending negative acknowledgement feedback information to the first terminal on the next one or more available PSFCH resources when the first target data is not successfully received on any transmission on the plurality of slot resources.

Optionally, a position of sending or not sending the feedback information on the PSFCH resources is determined according to at least one of followings: transmission information corresponding to the first target data received on a first one of the plurality of slot resources; transmission information corresponding to the first target data received on a last one of the plurality of slot resources; and resource pool configuration information.

It should be noted that the feedback information includes the ACK feedback information and/or the NACK feedback information.

Optionally, the position of sending or not sending the feedback information on the PSFCH resources can also be determined according to one of the followings: the transmission information corresponding to the first target data received on a certain one of the plurality of slot resources. Among them, a certain one of the plurality of slot resources is determined through negotiation between the first terminal and the second terminal, or a certain one of the plurality of slot resources is indicated by the first terminal to the second terminal.

The second terminal decodes the SCI in the first target data to obtain the transmission information, and consecutively receives on the plurality of slot resources according to the transmission information. If the first target data is successfully received at least once on the plurality of slot resources, the second terminal provides the ACK feedback information on the next one or more available PSFCH resources. The specific position for sending the ACK feedback information on the PSFCH resources is determined according to at least one of the followings: the transmission information corresponding to the first target data received on the first one of the plurality of slot resources; the transmission information corresponding to the first target data received on the last one of the plurality of slot resources; the resource pool configuration information; and the transmission information corresponding to the first target data received on a certain one of the plurality of slot resources.

If the first target data is not successfully received on any transmission on the plurality of slot resources, the second terminal provides the NACK feedback information on the next one or more available PSFCH resources. The specific position for sending the NACK feedback information on the PSFCH resources is determined according to at least one of the followings: the transmission information corresponding to the first target data received on the first one of the plurality of slot resources; the transmission information corresponding to the first target data received on the last one of the plurality of slot resources; the resource pool configuration information; and the transmission information corresponding to the first target data received on a certain one of the plurality of slot resources.

Optionally, the method further includes: determining that the first target data is successfully received when a target slot resource of the plurality of slot resources successfully receives the first target data at least once, or when the first target data is capable to be obtained after merging data transmitted from resource blocks of the target slot resource of the plurality of slot resources.

That is to say, if the second terminal successfully receives the first target data at least once on the plurality of slot resources, or if it can obtain the complete first target data after merging the transmissions of the current TB received on the plurality of slot resources, then it is determined that the first target data is successfully received.

Optionally, the method further includes: determining that the first target data is not successfully received when any one of the plurality of slot resources does not successfully receive the first target data, or when the first target data is not capable to be obtained after merging data transmitted from resource blocks of any one of the plurality of slot resources. That is to say, if the second terminal does not successfully receive the first target data on any one of the plurality of slot resources, or if it cannot obtain the complete first target data after merging the transmissions of the current TB received on the plurality of slot resources, then it is determined that the reception of the first target data has failed.

The specific process of the second terminal sending or not sending thee feedback information after one or more transmissions from the first terminal have ended is explained below and includes that:

the second terminal decodes SCI to obtain the transmission information and consecutively receives the first target data on the plurality of slot resources; and if the second terminal successfully receives the first target data once on the plurality of slot resources, or if a complete first target data can be obtained after merging transmissions of the current TB received by the plurality of slot resources, then it is determined that the first target data is successfully received.

When the first target data is successfully received, performing one of the followings:

when the first terminal adopts the retransmission based on HARQ ACK/NACK feedback, sending acknowledgement ACK feedback information to the first terminal on the next one or more available PSFCH resources;
when the first terminal adopts the retransmission based on HARQ NACK feedback, not sending the feedback information to the first terminal; and
when the first terminal adopts the blind retransmission, not sending the feedback information to the first terminal.

If the second terminal does not successfully receive the first target data on any one of the plurality of slot resources, or if it cannot obtain the complete first target data after merging the transmissions of the current TB received on the plurality of slot resources, then it is determined that the reception of the first target data has failed.

When reception of the first target data has failed, performing one of the followings:

when the first terminal adopts the retransmission based on HARQ ACK/NACK feedback, sending negative acknowledgement NACK feedback information to the first terminal on the next one or more available PSFCH resources;
when the first terminal adopts the retransmission based on HARQ NACK feedback, sending negative acknowledgement NACK feedback information to the first terminal on the next one or more available PSFCH resources; and
when the first terminal adopts the blind retransmission, not sending the feedback information to the first terminal.

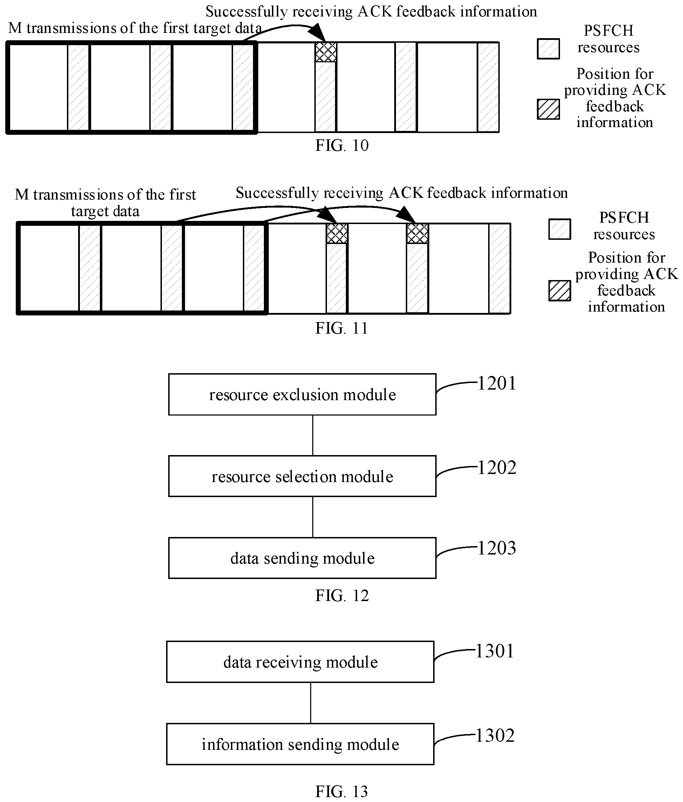

For example, referring to FIG. 10, taking the period of the PSFCH resources of 1 as an example, the situation where the second terminal sends the feedback information on the next PSFCH resource of the resource receiving the first target data is shown in FIG. 10. Among them, the frequency domain position for sending the feedback information on the PSFCH resources is mapped based on the last transmission of the first target data.

For another example, referring to FIG. 11, taking the period of the PSFCH resources of 1 as an example, the situation where the second terminal sends the feedback information on the next multiple PSFCH resources is shown in FIG. 11. Among them, the frequency domain position for sending the feedback information on the first one of the PSFCH resources is mapped based on the second to last transmission of the first target data, and the frequency domain position for sending the feedback information on the second one of the PSFCH resources is mapped based on the last transmission of the first target data.

As shown in FIG. 12, the embodiment of the present disclosure also provides a resource selection apparatus, applied to a first terminal, and the apparatus includes:

a resource exclusion module 1201 configured for performing resource exclusion on resources in a resource selection window by using a slot candidate resource as granularity, to obtain a candidate resource set;
a resource selection module 1202 configured for selecting a transmission resource for first target data from the candidate resource set; and
a data sending module 1203 configured for sending the first target data to a second terminal through the transmission resource.

Optionally, the slot candidate resource includes a single-slot candidate resource and/or a multi-slot candidate resource;

when the slot candidate resource includes the single-slot candidate resource, the transmission resource of the first target data is at least one single-slot candidate resource with consecutive time-domain positions in the candidate resource set; and
when the slot candidate resource includes the multi-slot candidate resource, the transmission resource of the first target data is at least one multi-slot candidate resource in the candidate resource set.

Optionally, the resource selection module 1202 includes:
a first selection unit configured for, if a number of resource groups satisfying a first target condition in the candidate resource set is greater than or equal to a first preset threshold value, randomly selecting one resource group from the resource groups satisfying the first target condition as partial transmission resources or entire transmission resources of the first target data.

Optionally, the resource groups satisfying the first target condition include at least one of followings: a resource group including M single-slot candidate resources with consecutive time-domain positions; a resource group including M single-slot candidate resources with consecutive time-domain positions starting from a first slot; and a resource group including M single-slot candidate resources with consecutive time-domain positions starting from a second slot;
wherein M is a configured number of consecutive repeated transmissions of the first target data; the first slot is a first one of slots with available resources in the candidate resource; and the second slot is after the first slot.

Optionally, the resource selection module 1202 includes:

a second selection unit configured for, in the candidate resource set, if the number of the resource groups satisfying the first target condition is less than the first preset threshold value, and if a number of resource groups satisfying a second target condition is greater than or equal to the first preset threshold value, randomly selecting one resource group from the resource groups satisfying the second target condition as the partial transmission resources or entire transmission resources of the first target data.

Optionally, the resource groups satisfying the second target condition is one of followings: a resource group including K single-slot candidate resources with consecutive time-domain positions; a resource group including K single-slot candidate resources with consecutive time-domain positions starting from a first slot; and a resource group including K single-slot candidate resources with consecutive time-domain positions starting from a second slot; wherein K is less than M, and K is greater than or equal to 1; M is a configured number of consecutive repeated transmissions of the first target data; the first slot is a first one of slots with available resources in the candidate resource; and the second slot is after the first slot.

Optionally, K equals M minus a first gradient value; and the first gradient value is a positive integer greater than or equal to 1.

Optionally, the resource selection module 1202 further includes:

a first determination unit configured for, if a number of single-slot candidate resources with consecutive time-domain positions included in a resource group selected for the first target data is equal to a number of transmissions of the first target data, determining the resource group for transmitting the first target data; and
a third selection unit configured for, if a number of single-slot candidate resources with consecutive time-domain positions included in the resource group selected for the first target data is less than the number of transmissions of the first target data, selecting remaining transmission resources for the first target data according to a retransmission method of the first terminal.

Optionally, the resource selection module 1202 includes: a fourth selection unit configured for selecting a target multi-slot candidate resource in the candidate resource set as partial transmission resources or entire transmission resources of the first target data.

Optionally, the target multi-slot candidate resource include at least one of followings: a multi-slot candidate resource that is randomly selected; and a multi-slot candidate resource that is most advanced in terms of time.

Optionally, the resource selection module 1202 further includes: a second determination unit configured for, if a number of single-slot candidate resources included in the target multi-slot candidate resource is equal to a number of transmissions of the first target data, determining the multi-slot candidate resource for transmitting the first target data;

a fifth selection unit configured for, if a number of single-slot candidate resources included in the target multi-slot candidate resource is less than the number of transmissions of the first target data, selecting remaining transmission resources for the first target data according to a retransmission method of the first terminal.

Optionally, the apparatus further includes:
a first sending module configured for sending to a third terminal at least one of followings:

at least one piece of first gap information, wherein the first gap information is gap information between two adjacent first transmission group sequences;
second gap information, wherein the second gap information includes all first gap information between adjacent first transmission group sequences; and
first indication information, wherein the first indication information is time-frequency position information of at least one gap for indicating the third terminal to perform data transmission;
wherein each piece of the first gap information includes at least one of followings: a first transmission end time of a first target transmission group sequence; a first transmission start time of a second target transmission group sequence; and a gap length between the first transmission end time and the first transmission start time; wherein the first target transmission group sequence and the second target transmission group sequence are two adjacent first transmission group sequences, and the first target transmission group sequence is before the second target transmission group sequence; and
the first transmission group sequence is determined according to a resource group selected for the first target data and remaining transmission resources, or the first transmission group sequence is determined according to a target multi-slot candidate resource and the remaining transmission resources.

Optionally, the apparatus further includes:

a first receiving module configured for receiving second indication information sent by a fourth terminal;
a first determination module configured for determining the transmission resource of the first target data according to the second indication information;
the second indication information includes at least one of followings:

at least one piece of third gap information, wherein the third gap information is gap information between two adjacent second transmission group sequences;

fourth gap information, wherein the fourth gap information includes all third gap information between adjacent second transmission group sequences;

an available resource of candidate resources of the fourth terminal; and

a transmission resource indicated by the fourth terminal for the first terminal to transmit the first target data;

wherein the second transmission group sequence is a transmission group sequence of the second target data transmitted by the fourth terminal according to the candidate resources; each piece of the third gap information includes at least one of followings: a second transmission end time of a third target transmission group sequence; a second transmission start time of a fourth target transmission group sequence; and a gap length between the second transmission end time and the second transmission start time; wherein the third target transmission group sequence and the fourth target transmission group sequence are two adjacent second transmission group sequence; and the third target transmission group sequence is before the fourth target transmission group sequence.

Optionally, the apparatus further includes:

a second receiving module configured for receiving feedback information sent by the second terminal on one or more available physical sidelink feedback channel (PSFCH) resources after sending the first target data;

wherein a receiving position of the sent feedback information is determined according to transmission information corresponding to the first target data.

It should be noted that the resource selection apparatus provided in the embodiment of the present disclosure is capable of executing the above resource selection method. Therefore, all embodiments of the above resource selection method are applicable to this apparatus and can achieve the same or similar technical effects.

As shown in FIG. 13, the embodiment of the present disclosure also provides an information sending apparatus, applied to a second terminal, and the apparatus includes:

a data receiving module 1301 configured for receiving first target data sent by a first terminal through a transmission resource, wherein the transmission resource is selected by the first terminal for the first target data from a candidate resource set, and the candidate resource set is obtained by performing resource exclusion on resources in a resource selection window by using a slot candidate resource as granularity; and

an information sending module 1302 configured for sending or not sending feedback information to the first terminal according to transmission information of sidelink control information (SCI).

Optionally, the transmission information includes at least one of followings: a number of consecutive transmissions of the first target data; time-frequency resource allocation information of the first target data; a resource reservation period of the first target data; a hybrid automatic repeat request (HARQ) retransmission method of the first terminal; and source identity of the first terminal.

Optionally, the information sending module 1302 includes:

a first receiving unit configured for receiving the first target data on a plurality of slot resources according to the transmission information; and

a first sending unit configured for sending or not sending the feedback information to the first terminal on next one or more available physical sidelink feedback channel (PSFCH) resources after the plurality of slot resources.

Optionally, the information sending module 1302 includes:

a third determination unit configured for determining a position of sending or not sending the feedback information on the PSFCH resources according to at least one of followings: transmission information corresponding to the first target data received on a first one of the plurality of slot resources; transmission information corresponding to the first target data received on a last one of the plurality of slot resources; and resource pool configuration information.

Optionally, the information sending module 1302 further includes:

a fourth determination unit configured for determining that the first target data is successfully received when a target slot resource of the plurality of slot resources successfully receives the first target data at least once, or when the first target data is capable to be obtained after merging data transmitted from resource blocks of the target slot resource of the plurality of slot resources.

Optionally, the information sending module 1302 further includes:

a fifth determination unit configured for determining that the first target data is not successfully received when any one of the plurality of slot resources does not successfully receive the first target data, or when the first target data is not capable to be obtained after merging data transmitted from resource blocks of any one of the plurality of slot resources.

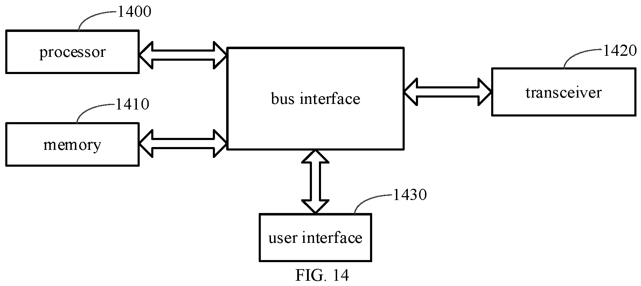

As shown in FIG. 14, the embodiment of the present disclosure also provides a terminal including: a processor 1400; and a memory 1410 connected to the processor 1400 through a bus interface, the memory 1410 is used to store the programs and data used by the processor 1400 when performing operations, and the processor 1400 invokes and executes the programs and data stored in the memory 1410.

Among them, the terminal further includes a transceiver 1420, which is connected to the bus interface for receiving and sending data under the control of the processor 1400.

Specifically, the processor 1400 executes the following processes:

performing resource exclusion on resources in a resource selection window by using a slot candidate resource as granularity, to obtain a candidate resource set;
selecting a transmission resource for first target data from the candidate resource set; and
sending the first target data to a second terminal through the transmission resource.

Optionally, the slot candidate resource includes a single-slot candidate resource and/or a multi-slot candidate resource;

when the slot candidate resource includes the single-slot candidate resource, the transmission resource of the first target data is at least one single-slot candidate resource with consecutive time-domain positions in the candidate resource set; and
when the slot candidate resource includes the multi-slot candidate resource, the transmission resource of the first target data is at least one multi-slot candidate resource in the candidate resource set.

Optionally, when the slot candidate resource includes the single-slot candidate resource, the processor 1400 is configured for:
if a number of resource groups satisfying a first target condition in the candidate resource set is greater than or equal to a first preset threshold value, randomly selecting one resource group from the resource groups satisfying the first target condition as partial transmission resources or entire transmission resources of the first target data.

Optionally, the resource groups satisfying the first target condition include at least one of followings: a resource group including M single-slot candidate resources with consecutive time-domain positions; a resource group including M single-slot candidate resources with consecutive time-domain positions starting from a first slot; and a resource group including M single-slot candidate resources with consecutive time-domain positions starting from a second slot;
wherein M is a configured number of consecutive repeated transmissions of the first target data; the first slot is a first one of slots with available resources in the candidate resource; and the second slot is after the first slot.

Optionally, when the slot candidate resource includes the single-slot candidate resource, the processor 1400 is configured for:
in the candidate resource set, if the number of the resource groups satisfying the first target condition is less than the first preset threshold value, and if a number of resource groups satisfying a second target condition is greater than or equal to the first preset threshold value, randomly selecting one resource group from the resource groups satisfying the second target condition as the partial transmission resources or entire transmission resources of the first target data.

Optionally, the resource groups satisfying the second target condition is one of followings: a resource group including K single-slot candidate resources with consecutive time-domain positions; a resource group including K single-slot candidate resources with consecutive time-domain positions starting from a first slot; and a resource group including K single-slot candidate resources with consecutive time-domain positions starting from a second slot;
wherein K is less than M, and K is greater than or equal to 1; M is a configured number of consecutive repeated transmissions of the first target data; the first slot is a first one of slots with available resources in the candidate resource; and the second slot is after the first slot.

Optionally, K equals M minus a first gradient value; and the first gradient value is a positive integer greater than or equal to 1.

Optionally, the processor 1400 is further configured for:

if a number of single-slot candidate resources with consecutive time-domain positions included in a resource group selected for the first target data is equal to a number of transmissions of the first target data, determining the resource group for transmitting the first target data; and
if a number of single-slot candidate resources with consecutive time-domain positions included in the resource group selected for the first target data is less than the number of transmissions of the first target data, selecting remaining transmission resources for the first target data according to a retransmission method of the first terminal.

Optionally, when the slot candidate resource includes the multi-slot candidate resource, the processor 1400 is configured for:
selecting a target multi-slot candidate resource in the candidate resource set as partial transmission resources or entire transmission resources of the first target data.

Optionally, the target multi-slot candidate resource include at least one of followings: a multi-slot candidate resource that is randomly selected; and a multi-slot candidate resource that is most advanced in terms of time.

Optionally, the processor 1400 is further configured for:

if a number of single-slot candidate resources included in the target multi-slot candidate resource is equal to a number of transmissions of the first target data, determining the multi-slot candidate resource for transmitting the first target data;
if a number of single-slot candidate resources included in the target multi-slot candidate resource is less than the number of transmissions of the first target data, selecting remaining transmission resources for the first target data according to a retransmission method of the first terminal.

Optionally, the transceiver 1420 is configured for: sending to a third terminal at least one of followings:

at least one piece of first gap information, wherein the first gap information is gap information between two adjacent first transmission group sequences;
second gap information, wherein the second gap information includes all first gap information between adjacent first transmission group sequences; and
first indication information, wherein the first indication information is time-frequency position information of at least one gap for indicating the third terminal to perform data transmission;
wherein each piece of the first gap information includes at least one of followings: a first transmission end time of a first target transmission group sequence; a first transmission start time of a second target transmission group sequence; and a gap length between the first transmission end time and the first transmission start time; wherein the first target transmission group sequence and the second target transmission group sequence are two adjacent first transmission group sequences, and the first target transmission group sequence is before the second target transmission group sequence; and the first transmission group sequence is determined according to a resource group selected for the first target data and remaining transmission resources, or the first transmission group sequence is determined according to a target multi-slot candidate resource and the remaining transmission resources.

Optionally, the transceiver 1420 is configured for: receiving second indication information sent by a fourth terminal;

the processor 1400 is further configured for determining the transmission resource of the first target data according to the second indication information; the second indication information includes at least one of followings:

at least one piece of third gap information, wherein the third gap information is gap information between two adjacent second transmission group sequences;
fourth gap information, wherein the fourth gap information includes all third gap information between adjacent second transmission group sequences;
an available resource of candidate resources of the fourth terminal; and
a transmission resource indicated by the fourth terminal for the first terminal to transmit the first target data;
wherein the second transmission group sequence is a transmission group sequence of the second target data transmitted by the fourth terminal according to the candidate resources;
each piece of the third gap information includes at least one of followings: a second transmission end time of a third target transmission group sequence; a second transmission start time of a fourth target transmission group sequence; and a gap length between the second transmission end time and the second transmission start time; wherein the third target transmission group sequence and the fourth target transmission group sequence are two adjacent second transmission group sequence; and the third target transmission group sequence is before the fourth target transmission group sequence.

Optionally, the transceiver 1420 is further configured for:
receiving feedback information sent by the second terminal on one or more available physical sidelink feedback channel (PSFCH) resources after sending the first target data; wherein a receiving position of the sent feedback information is determined according to transmission information corresponding to the first target data.

Among them, in FIG. 14, the bus architecture can include any number of interconnected buses and bridges, specifically one or more processors represented by the processor 1400 and various circuits of memories represented by the memory 1410 connected together. The bus architecture can also link various other circuits such as peripheral devices, voltage regulators, and power management circuits together, which are well-known in this field. Therefore, this specification will not further describe them. The bus interface provides a user interface 1430. The transceiver 1420 can be a plurality of components, including a transmitter and a receiver, for providing a unit for communicating with various other devices over a transmission medium. The processor 1400 is responsible for managing the bus architecture and general processing, while the memory 1410 can store the data used by the processor 1400 during operation execution.

The embodiment of the present disclosure also provides a terminal including: a processor; and a memory connected to the processor through a bus interface, the memory is used to store the programs and data used by the processor when performing operations, and the processor invokes and executes the programs and data stored in the memory.

Among them, the terminal further includes a transceiver, which is connected to the bus interface for receiving and sending data under the control of the processor.

It should be noted that the terminal provided in this embodiment of the present disclosure has a similar structure to the terminal shown in FIG. 14, and which will not be repeated here.

Specifically, the transceiver performs the following process:

receiving first target data sent by a first terminal through a transmission resource, wherein the transmission resource is selected by the first terminal for the first target data from a candidate resource set, and the candidate resource set is obtained by performing resource exclusion on resources in a resource selection window by using a slot candidate resource as granularity; and
and the processor performs the following process:
sending or not sending feedback information to the first terminal according to transmission information of sidelink control information (SCI).

Optionally, the transmission information includes at least one of followings: a number of consecutive transmissions of the first target data; time-frequency resource allocation information of the first target data; a resource reservation period of the first target data; a hybrid automatic repeat request (HARQ) retransmission method of the first terminal; and source identity of the first terminal.

Optionally, the transceiver is configured for:

receiving the first target data on a plurality of slot resources according to the transmission information; and
sending or not sending the feedback information to the first terminal on next one or more available physical sidelink feedback channel (PSFCH) resources after the plurality of slot resources.

Optionally, the processor is configured for determining a position of sending or not sending the feedback information on the PSFCH resources according to at least one of followings:

transmission information corresponding to the first target data received on a first one of the plurality of slot resources;

transmission information corresponding to the first target data received on a last one of the plurality of slot resources; and
resource pool configuration information.

Optionally, the processor is further configured for:
determining that the first target data is successfully received when a target slot resource of the plurality of slot resources successfully receives the first target data at least once, or when the first target data is capable to be obtained after merging data transmitted from resource blocks of the target slot resource of the plurality of slot resources.

Optionally, the processor is further configured for:
determining that the first target data is not successfully received when any one of the plurality of slot resources does not successfully receive the first target data, or when the first target data is not capable to be obtained after merging data transmitted from resource blocks of any one of the plurality of slot resources.

In addition, the specific embodiments of the present disclosure herein also provide a readable storage medium on which a computer program is stored, wherein the program, when executed by a processor, implements the steps of any one of the resource selection methods described above, or implements the steps of any one of the information sending methods described above.

In the several embodiments provided in the present disclosure, it should be understood that the disclosed methods and apparatuses can be implemented in other ways. For example, the apparatus embodiments described above are only illustrative. For example, the division of units is only a logical functional division. In practical implementation, there may be other division methods, such as multiple units or components being combined or integrated into another system, or some features being ignored or not executed. On the other hand, the mutual coupling or direct coupling or communication connection displayed or discussed can be indirect coupling or communication connection through some interface, apparatus or unit, which can be electrical, mechanical or other forms.

In addition, the various functional units in the various embodiments in the present disclosure can be integrated into one processing unit, or each unit can be physically included separately, or two or more units can be integrated into one unit. The above integrated units can be implemented in the form of hardware or in the form of hardware and software functional units.

The integrated units implemented in the form of software functional units mentioned above can be stored in a computer-readable storage medium. The above software functional units are stored in a storage medium, including several instructions for causing a computer device (which may be a personal computer, server, or network device, etc.) to perform some steps of the resource selection method described in various embodiments of the present disclosure, or to perform some steps of the information sending method described in various embodiments of the present disclosure. The aforementioned storage medium include various medium that can store program code, such as USB flash drives, portable hard drives, Read Only Memory (ROM), Random Access Memory (RAM), magnetic disks, or optical disks.

The above are optional embodiments of the present disclosure, and it should be noted that for persons skilled in the art, several improvements and refinements can be made without departing from the principles described in the present disclosure. These improvements and refinements are also within the scope of protection of the present disclosure.

**Claims**

1. A resource selection method, applied to a first terminal, **characterized in that** the method comprises:

    performing resource exclusion on resources in a resource selection window by using a slot candidate resource as granularity, to obtain a candidate resource set;
    selecting a transmission resource for first target data from the candidate resource set; and
    sending the first target data to a second terminal through the transmission resource.

2. The resource selection method according to claim 1, **characterized in that** the slot candidate resource comprises a single-slot candidate resource and/or a multi-slot candidate resource;

    when the slot candidate resource comprises the single-slot candidate resource, the transmission resource of the first target data is at least one single-slot candidate resource with consecutive time-domain positions in the candidate resource set; and
    when the slot candidate resource comprises the multi-slot candidate resource, the transmission resource of the first target data is at least one multi-slot candidate resource in the candidate resource set.

3. The resource selection method according to claim 2, **characterized in that** when the slot candidate resource comprises the single-slot candidate resource, the selecting the transmission resource for the first target data from the candidate resource set comprises:
    if a number of resource groups satisfying a first target condition in the candidate resource set is greater than or equal to a first preset threshold value, randomly selecting one resource group from the resource groups satisfying the first target condition as partial transmission resources or entire transmission resources of the first target data.

4. The resource selection method according to claim 3, **characterized in that** the resource groups satisfying the first target condition comprise at least one of followings:

    a resource group comprising M single-slot candidate resources with consecutive time-domain positions;
    a resource group comprising M single-slot candidate resources with consecutive time-domain positions starting from a first slot; and
    a resource group comprising M single-slot candidate resources with consecutive time-domain positions starting from a second slot;
    wherein M is a configured number of consecutive repeated transmissions of the first target data;
    the first slot is a first one of slots with available resources in the candidate resource; and
    the second slot is after the first slot.

5. The resource selection method according to claim 3, **characterized in that** when the slot candidate resource comprises the single-slot candidate resource, the selecting the transmission resource for the first target data from the candidate resource set comprises:
    in the candidate resource set, if the number of the resource groups satisfying the first target condition is less than the first preset threshold value, and if a number of resource groups satisfying a second target condition is greater than or equal to the first preset threshold value, randomly selecting one resource group from the resource groups satisfying the second target condition as the partial transmission resources or entire transmission resources of the first target data.

6. The resource selection method according to claim 5, **characterized in that** the resource groups satisfying the second target condition is one of followings:

    a resource group comprising K single-slot candidate resources with consecutive time-domain positions;
    a resource group comprising K single-slot candidate resources with consecutive time-domain positions starting from a first slot; and
    a resource group comprising K single-slot candidate resources with consecutive time-domain positions starting from a second slot;
    wherein K is less than M, and K is greater than or equal to 1;

M is a configured number of consecutive repeated transmissions of the first target data;
the first slot is a first one of slots with available resources in the candidate resource; and
the second slot is after the first slot.

**7.** The resource selection method according to claim 6, **characterized in that** K equals M minus a first gradient value; and
the first gradient value is a positive integer greater than or equal to 1.

**8.** The resource selection method according to claim 3 or 5, **characterized in that** the method further comprises:

if a number of single-slot candidate resources with consecutive time-domain positions comprised in a resource group selected for the first target data is equal to a number of transmissions of the first target data, determining the resource group for transmitting the first target data; and
if a number of single-slot candidate resources with consecutive time-domain positions comprised in the resource group selected for the first target data is less than the number of transmissions of the first target data, selecting remaining transmission resources for the first target data according to a retransmission method of the first terminal.

**9.** The resource selection method according to claim 2, **characterized in that** when the slot candidate resource comprises the multi-slot candidate resource, the selecting the transmission resource for the first target data from the candidate resource set comprises:
selecting a target multi-slot candidate resource in the candidate resource set as partial transmission resources or entire transmission resources of the first target data.

**10.** The resource selection method according to claim 9, **characterized in that** the target multi-slot candidate resource comprise at least one of followings:

a multi-slot candidate resource that is randomly selected; and
a multi-slot candidate resource that is most advanced in terms of time.

**11.** The resource selection method according to claim 9, **characterized in that** the method further comprises:

if a number of single-slot candidate resources comprised in the target multi-slot candidate resource is equal to a number of transmissions of the first target data, determining the multi-slot candidate resource for transmitting the first target data; and
if a number of single-slot candidate resources comprised in the target multi-slot candidate resource is less than the number of transmissions of the first target data, selecting remaining transmission resources for the first target data according to a retransmission method of the first terminal.

**12.** The resource selection method according to claim 1, **characterized in that** the method further comprises:
sending to a third terminal at least one of followings:

at least one piece of first gap information, wherein the first gap information is gap information between two adjacent first transmission group sequences;
second gap information, wherein the second gap information comprises all first gap information between adjacent first transmission group sequences; and
first indication information, wherein the first indication information is time-frequency position information of at least one gap for indicating the third terminal to perform data transmission;
wherein each piece of the first gap information comprises at least one of followings:

a first transmission end time of a first target transmission group sequence;
a first transmission start time of a second target transmission group sequence; and
a gap length between the first transmission end time and the first transmission start time;
wherein the first target transmission group sequence and the second target transmission group sequence are two adjacent first transmission group sequences, and the first target transmission group sequence is before the second target transmission group sequence; and
the first transmission group sequence is determined according to a resource group selected for the first target data and remaining transmission resources, or the first transmission group sequence is determined according to a target multi-slot candidate resource and the remaining transmission resources.

**13.** The resource selection method according to claim 1, **characterized in that** the method further comprises:

receiving second indication information sent by a fourth terminal; and
determining the transmission resource of the first target data according to the second indication information;

wherein the second indication information comprises at least one of followings:

at least one piece of third gap information, wherein the third gap information is gap information between two adjacent second transmission group sequences;

fourth gap information, wherein the fourth gap information comprises all third gap information between adjacent second transmission group sequences;

an available resource of candidate resources of the fourth terminal; and

a transmission resource indicated by the fourth terminal for the first terminal to transmit the first target data;

wherein the second transmission group sequence is a transmission group sequence of the second target data transmitted by the fourth terminal according to the candidate resources;

each piece of the third gap information comprises at least one of followings:

a second transmission end time of a third target transmission group sequence;

a second transmission start time of a fourth target transmission group sequence; and

a gap length between the second transmission end time and the second transmission start time;

wherein the third target transmission group sequence and the fourth target transmission group sequence are two adjacent second transmission group sequence; and the third target transmission group sequence is before the fourth target transmission group sequence.

14. The resource selection method according to claim 1, **characterized in that** the method further comprises:

receiving feedback information sent by the second terminal on one or more available physical sidelink feedback channel (PSFCH) resources after sending the first target data;

wherein a receiving position of the sent feedback information is determined according to transmission information corresponding to the first target data.

15. An information sending method, applied to a second terminal, **characterized in that** the method comprises:

receiving first target data sent by a first terminal through a transmission resource, wherein the transmission resource is selected by the first terminal for the first target data from a candidate resource set, and the candidate resource set is obtained by performing resource exclusion on resources in a resource selection window by using a slot candidate resource as granularity; and

sending or not sending feedback information to the first terminal according to transmission information of sidelink control information (SCI).

16. The information sending method according to claim 15, **characterized in that** the transmission information comprises at least one of followings:

a number of consecutive transmissions of the first target data;

time-frequency resource allocation information of the first target data;

a resource reservation period of the first target data;

a hybrid automatic repeat request (HARQ) retransmission method of the first terminal; and source identity of the first terminal.

17. The information sending method according to claim 15, **characterized in that** the sending or not sending feedback information to the first terminal according to transmission information of sidelink control information (SCI) comprises:

receiving the first target data on a plurality of slot resources according to the transmission information; and

sending or not sending the feedback information to the first terminal on next one or more available physical sidelink feedback channel (PSFCH) resources after the plurality of slot resources.

18. The information sending method according to claim 17, **characterized in that** a position of sending or not sending the feedback information on the PSFCH resources is determined according to at least one of followings:

transmission information corresponding to the first target data received on a first one of the plurality of slot resources;

transmission information corresponding to the first target data received on a last one of the plurality of slot resources; and

resource pool configuration information.

19. The information sending method according to claim 17, **characterized in that** the method further comprises:

determining that the first target data is successfully received when a target slot resource of the plurality of slot resources successfully receives the first target data at least once, or when the first target data is capable to be obtained after merging data transmitted from resource blocks of the target slot resource of the plurality of slot resources.

20. The information sending method according to claim 17, **characterized in that** the method further comprises:

determining that the first target data is not successfully received when any one of the plurality of slot resources does not successfully receive the first target data, or when the first target data is not capable to be obtained after merging data transmitted from resource blocks of any one of the plurality of slot resources.

21. A resource selection apparatus, applied to a first terminal, **characterized in that** the apparatus comprises:

a resource exclusion module configured for performing resource exclusion on resources in a resource selection window by using a slot candidate resource as granularity, to obtain a candidate resource set;
a resource selection module configured for selecting a transmission resource for first target data from the candidate resource set; and
a data sending module configured for sending the first target data to a second terminal through the transmission resource.

22. An information sending apparatus, applied to a second terminal, **characterized in that** the apparatus comprises:

a data receiving module configured for receiving first target data sent by a first terminal through a transmission resource, wherein the transmission resource is selected by the first terminal for the first target data from a candidate resource set, and the candidate resource set is obtained by performing resource exclusion on resources in a resource selection window by using a slot candidate resource as granularity; and
an information sending module configured for sending or not sending feedback information to the first terminal according to transmission information of sidelink control information (SCI).

23. A terminal, comprising: a processor, a memory, and a program stored on the memory and executable on the processor, **characterized in that** the program, when executed by the processor, implements steps of the resource selection method according to any one of claims 1 to 14, or implements steps of the information sending method according to any one of claims 15 to 20.

24. A readable storage medium, storing a program that, when executed by a processor, implements steps of the resource selection method according to any one of claims 1 to 14, or implements steps of the information sending method according to any one of claims 15 to 20.

performing resource exclusion on resources in a resource selection window by using a slot candidate resource as granularity, to obtain a candidate resource set ⸺101

selecting a transmission resource for first target data from the candidate resource set ⸺102

sending the first target data to a second terminal through the transmission resource ⸺103

FIG. 1

FIG. 2

FIG. 3

FIG. 4

FIG. 5

FIG. 6

HARQ RTT

Excluded resources

Multi-slot candidate resource set

Transmission resources selected by MAC layer

FIG. 7

selectable resource set in the gap

Non-selectable resources in the UE-B gap

Selectable resources in the UE-B gap

Initial transmission resources and retransmission resources selected by UE-A

FIG. 8

| receiving first target data sent by a first terminal through a transmission resource | 901 |
| --- |

| sending or not sending feedback information to the first terminal according to transmission information of sidelink control information (SCI) | 902 |

FIG. 9

Successfully receiving ACK feedback information

M transmissions of the first target data

□ PSFCH resources

▨ Position for providing ACK feedback information

FIG. 10

M transmissions of the first target data

Successfully receiving ACK feedback information

□ PSFCH resources

▨ Position for providing ACK feedback information

FIG. 11

| resource exclusion module | ──1201 |

| resource selection module | ──1202 |

| data sending module | ──1203 |

FIG. 12

| data receiving module | ──1301 |

| information sending module | ──1302 |

FIG. 13

1400

processor

1410

memory

bus interface

1420

transceiver

1430

user interface

FIG. 14

<div align="center">

**INTERNATIONAL SEARCH REPORT**

</div>

| International application No. |
|---|
| **PCT/CN2023/084406** |

| A. | CLASSIFICATION OF SUBJECT MATTER |
|---|---|

H04W 72/04(2023.01)i

According to International Patent Classification (IPC) or to both national classification and IPC

| B. | FIELDS SEARCHED |
|---|---|

Minimum documentation searched (classification system followed by classification symbols)

IPC:H04W H04L

Documentation searched other than minimum documentation to the extent that such documents are included in the fields searched

Electronic data base consulted during the international search (name of data base and, where practicable, search terms used)

WPABSC; CNTXT; WOTXT; EPTXT; USTXT; 3GPP: 时隙, 单时隙, 多时隙, 资源, 候选, 排除, 选择, slot, single slot, multi slot, resource, candidate, exclusion, selection

| C. | DOCUMENTS CONSIDERED TO BE RELEVANT |
|---|---|

| Category* | Citation of document, with indication, where appropriate, of the relevant passages | Relevant to claim No. |
|---|---|---|
| X | CN 111586722 A (GOHIGH DATA NETWORKS TECHNOLOGY CO., LTD.) 25 August 2020 (2020-08-25)<br>    description, paragraphs 0223-0232, and figure 2 | 1, 15, 21-24 |
| A | CN 102186222 A (COMBA TELECOM SYSTEMS (CHINA) CO., LTD.) 14 September 2011 (2011-09-14)<br>    entire document | 1-24 |
| A | CN 109219015 A (CHINA ACADEMY OF TELECOMMUNICATIONS TECHNOLOGY) 15 January 2019 (2019-01-15)<br>    entire document | 1-24 |
| A | CN 111865505 A (RESEARCH INSTITUTE OF CHINA MOBILE COMMUNICATIONS CORP. et al.) 30 October 2020 (2020-10-30)<br>    entire document | 1-24 |
| A | CN 112261613 A (GOHIGH DATA NETWORKS TECHNOLOGY CO., LTD.) 22 January 2021 (2021-01-22)<br>    entire document | 1-24 |

| ☐ Further documents are listed in the continuation of Box C. | ☑ See patent family annex. |
|---|---|

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **19 June 2023** | **19 June 2023** |

| Name and mailing address of the ISA/CN | Authorized officer |
|---|---|
| **China National Intellectual Property Administration (ISA/ CN)**<br>**China No. 6, Xitucheng Road, Jimenqiao, Haidian District, Beijing 100088** | |
| | Telephone No. |

Form PCT/ISA/210 (second sheet) (July 2022)

INTERNATIONAL SEARCH REPORT
Information on patent family members

International application No.

**PCT/CN2023/084406**

| Patent document cited in search report | | | Publication date (day/month/year) | Patent family member(s) | | | Publication date (day/month/year) |
|---|---|---|---|---|---|---|---|
| CN | 111586722 | A | 25 August 2020 | None | | | |
| CN | 102186222 | A | 14 September 2011 | None | | | |
| CN | 109219015 | A | 15 January 2019 | WO | 2019007183 | A1 | 10 January 2019 |
| | | | | TW | 201907739 | A | 16 February 2019 |
| | | | | TWI | 687107 | B | 01 March 2020 |
| CN | 111865505 | A | 30 October 2020 | None | | | |
| CN | 112261613 | A | 22 January 2021 | None | | | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

• CN 202210471053